# EUROPÄISCHE PATENTSCHRIFT

(11) **EP 2 794 309 B1**
(45) Veröffentlichungstag und Bekanntmachung des Hinweises auf die Patenterteilung: **16.09.2015**
(21) Anmeldenummer: 12799065.3
(22) Anmeldetag: 05.12.2012
(51) Int. Cl.: B60G 17/052

(54) **LUFTFEDERUNGSANLAGE EINES KRAFTFAHRZEUGS UND VERFAHREN ZU DEREN STEUERUNG**
PNEUMATIC SUSPENSION SYSTEM OF A MOTOR VEHICLE AND METHOD FOR CONTROL THEREOF
INSTALLATION A SUSPENSION PNEUMATIQUE D'UN VEHICULE AUTOMOBILE ET PROCEDE DE COMMANDE DE LADITE INSTALLATION

(30) Priorität: 21.12.2011 DE 102011121755
(43) Veröffentlichungstag der Anmeldung: 29.10.2014
(73) Patentinhaber: WABCO GmbH, 30453 Hannover (DE)
(72) Erfinder: GOCZ, Reinhard, 30926 Seelze (DE); HAVERKAMP, Michael, 30455 Hannover (DE); LUCAS, Johann, 31319 Sehnde (DE); RUTSCH, Andreas, 30519 Hannover (DE); STELLMACHER, Thomas, 31655 Stadthagen (DE)
(74) Vertreter: Lauerwald, Jörg
(86) Internationale Anmeldenummer: PCT/EP2012/005001
(87) Internationale Veröffentlichungsnummer: WO 2013/091776

(56) Entgegenhaltungen:
- DE-A1- 2 056 634
- DE-A1- 10 004 880
- DE-B3-102005 017 590
- DE-B4- 4 243 577
- DE-B4- 10 223 405
- DE-C2- 19 835 491
- KR-A- 20020 074 860

## Beschreibung

Die Erfindung betrifft eine Luftfederungsanlage eines Kraftfahrzeugs, mit mehreren den Luftfedern mindestens einer Fahrzeugachse zugeordneten Federbälgen, die über jeweils mit einem Niveauregelventil versehene Anschlussleitungen mit einer Hauptdruckleitung verbindbar und gegenüber dieser absperrbar sind, wobei die Hauptdruckleitung über mindestens ein zugeordnetes Ventil wechselweise mit einer Druckluftquelle und einer Druckluftsenke verbindbar sowie gegenüber diesen absperrbar ist.

Außerdem betrifft die Erfindung eine Luftfederungsanlage eines Kraftfahrzeugs, mit mehreren den Luftfedern mindestens einer Fahrzeugachse zugeordneten Federbälgen, die gemeinsam über eine mit einem Niveauregelventil versehene Anschlussleitung mit einer Hauptdruckleitung verbindbar und gegenüber dieser absperrbar sind, wobei die Hauptdruckleitung über mindestens ein zugeordnetes Ventil wechselweise mit einer Druckluftquelle und einer Druckluftsenke verbindbar sowie gegenüber diesen absperrbar ist.

Die Erfindung betrifft ferner jeweils ein Verfahren zur Steuerung einer derartigen Luftfederungsanlage eines Kraftfahrzeugs beim Be- und Entlüften der Federbälge.

Luftfederungsanlagen weisen gegenüber konventionellen Stahlfederungen wesentliche Vorteile auf und kommen daher zunehmend sowohl bei Nutzfahrzeugen, wie Lastkraftwagen und Omnibussen, als auch bei vorzugsweise schweren Personenkraftfahrzeugen, wie Oberklasselimousinen und SUV's, zur Anwendung. So ermöglicht eine Luftfederungsanlage eine beladungsunabhängige Niveauregelung, da der aktuelle Beladungszustand jeweils durch eine Anpassung des Balgdruckes in den Federbälgen der Luftfedern ausgeglichen werden kann. Ebenso bietet eine Luftfederungsanlage aufgrund der progressiven Federkennlinien der Luftfedern einen besonders sicheren Fahrbahnkontakt der Räder und ein komfortables Ansprechverhalten beim Aus- und Einfedern der Räder.

Ein weiterer Vorteil von Luftfederungsanlagen besteht darin, dass die Bodenfreiheit der betreffenden Fahrzeuge bedarfsweise verändert, z.B. für einen Offroad-Einsatz erhöht und für eine Schnellfahrt auf der Autobahn verringert werden kann. Bei Nutzfahrzeugen kommt hinzu, dass der Fahrzeugaufbau zum Be- und Entladen abgesenkt oder auf eine geeignete Höhe eingestellt werden kann. So kann beispielsweise der Fahrzeugrahmen eines luftgefederten Lastkraftwagens oder Anhängers zum Absetzen einer Wechselpritsche abgesenkt und zu deren Aufnahme wieder angehoben werden. Ebenso kann der Ladeboden eines Lastkraftwagens zur Erleichterung des Be- und Entladens durch Absenken oder Erhöhen des Balgdruckes an der Hinterachse auf das Niveau einer Laderampe eingestellt werden. Bei luftgefederten Omnibussen kann der fahrbahnäußere Fahrzeugaufbau zur Erleichterung des Ein- und Aussteigens der Fahrgäste durch Ablassen der Druckluft aus den fahrbahnäußeren Federbälgen abgesenkt und anschließend durch eine Befüllung der Federbälge wieder angehoben werden.

Der prinzipielle Aufbau einer derartigen Luftfederungsanlage ist beispielsweise aus der DE 198 35 491 C2 und der DE 100 04 880 A1 bekannt.

Die Luftfederungsanlage gemäß der DE 198 35 491 C2 weist mehrere Federbälge auf, die über jeweils mit einem Niveauregelventil versehene Anschlussleitungen mit einer Hauptdruckleitung verbindbar und gegenüber dieser absperrbar sind. Die Niveauregelventile sind jeweils als 2/2-Wege-Magnetschaltventile ausgebildet, die in einer ersten Schaltstellung (Ruhestellung) geschlossen und in einer zweiten Schaltstellung (Betätigungsstellung) geöffnet sind. Die Hauptdruckleitung ist über eine mit einem Kompressor, einem Lufttrockner und einem Rückschlagventil versehene Versorgungsleitung belüftbar sowie über eine zwischen dem Kompressor und dem Lufttrockner abzweigende und mit einem Ablassventil versehene Entlüftungsleitung entlüftbar. Das Ablassventil ist als ein druckgesteuertes 2/2-Wege-Schaltventil ausgebildet, das in einer ersten Schaltstellung (Ruhestellung) geschlossen und in einer zweiten Schaltstellung (Betätigungsstellung) geöffnet ist. Das dem Ablassventil zugeordnete Vorsteuerventil ist als ein 3/2-Wege-Magnetschaltventil ausgebildet, das die pneumatische Steuerleitung in einer ersten Schaltstellung (Ruhestellung) mit der Umgebung und in einer zweiten Schaltstellung (Betätigungsstellung) mit der Hauptdruckleitung verbindet.

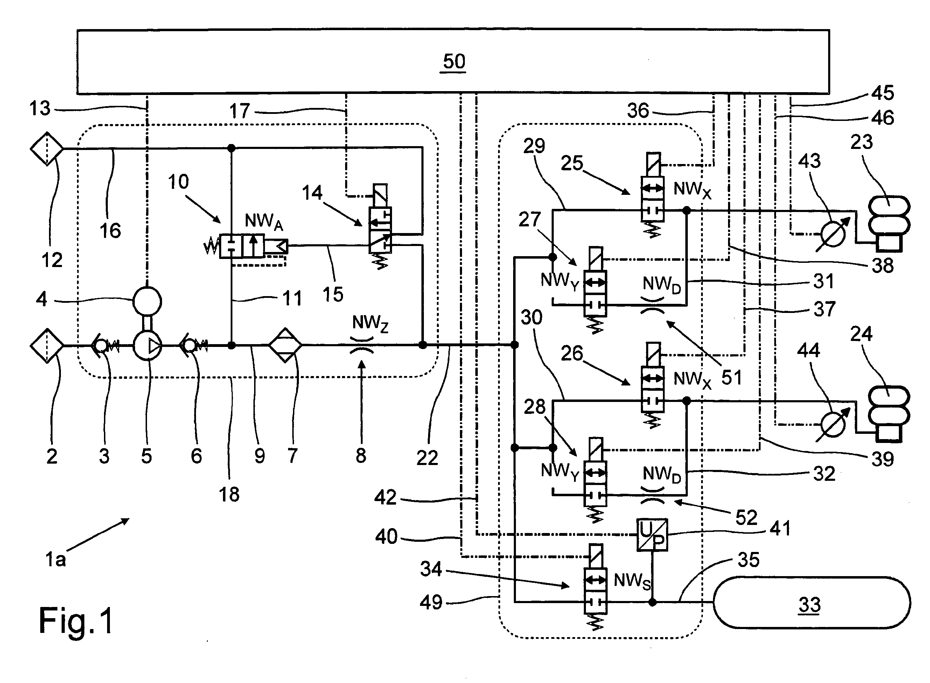

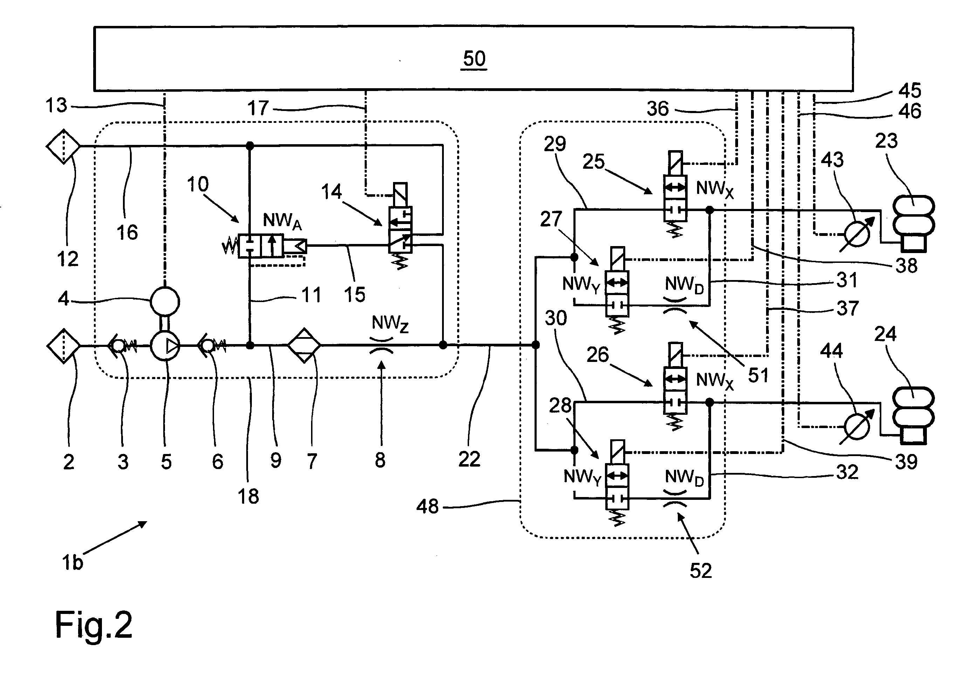

In einer ersten Ausführungsform dieser bekannten Luftfederungsanlage gemäß der dortigen Fig. 1 ist in einem zu dem Rückschlagventil parallelen Leitungsabschnitt ein als ein druckgesteuertes 2/2-Wege-Schaltventil ausgebildetes Drosselventil angeordnet, das in einer ersten Schaltstellung (Ruhestellung) geschlossen und in einer zweiten Schaltstellung (Betätigungsstellung) mit einer Drosselquerschnittsfläche geöffnet ist, und dessen pneumatischer Steuereingang an die pneumatische Steuerleitung des Ablassventils angeschlossen ist. Das Drosselventil wird somit beim Belüften der Hauptdruckleitung wie auch das Ablassventil durch das Vorsteuerventil geöffnet, wobei die Drosselquerschnittsfläche den Luftmassenstrom begrenzt und vor dem Lufttrockner entspannt, wodurch die Feuchtigkeitsaufnahme der Druckluft aus dem Lufttrockner erhöht und damit dessen Regeneration verbessert wird. In einer zweiten Ausführungsform dieser bekannten Luftfederungsanlage nach der dortigen Fig. 2 sind das Ablassventil und das Drosselventil in einem gemeinsamen druckgesteuerten 4/2-Wege-Schaltventil zusammengefasst.

Die Luftfederungsanlage gemäß der DE 100 04 880 A1 unterscheidet sich von dem gerade beschriebenen Stand der Technik dadurch, dass ein Rückschlagventil zwischen dem Kompressor und dem Lufttrockner angeordnet ist, und dass anstelle des Rückschlagventils und des parallel geschalteten Drosselventils nun dem Trockner in der Versorgungsleitung in Belüftungsrichtung eine Drossel nachgeschaltet ist. Zudem weist das Ablassventil nun eine Druckbegrenzungsfunktion sowie ein in der zweiten Schaltstellung (Betätigungsstellung) aktiviertes Rückschlagventil auf. Auch weist die Luftfederungsanlage gemäß der DE 100 04 880 A1 einen Druckspeicher auf, der über eine mit einem Speicherventil versehene Anschlussleitung mit der Hauptdruckleitung verbindbar und gegenüber dieser absperrbar ist. In einer ersten Ausführungsform dieser bekannten Luftfederungsanlage nach der dortigen Fig. 1 ist zusätzlich ein Hochdruck-Ablassventil vorgesehen, das als ein 2/2-Wege-Magnetschaltventil ausgebildet ist, und durch das bedarfsweise Druckluft aus der Hauptdruckleitung unter Umgehung des Lufttrockners in die Umgebung abgelassen werden kann. In einer zweiten Ausführungsform dieser bekannten Luftfederungsanlage nach der dortigen Fig. 2 ist dem Ablassventil in Entlüftungsrichtung ein Drosselventil mit steuerbarer Drosselquerschnittsfläche nachgeschaltet, durch das beim Entlüften von Federbälgen der in die Umgebung abströmende Luftmassenstrom begrenzbar und damit die Absenkgeschwindigkeit des Fahrzeugaufbaus z.B. an einer Fahrzeugachse oder an einer Fahrzeugseite steuerbar ist.

In der DE 42 43 577 B4 ist dagegen eine Luftfederungsanlage eines Kraftfahrzeugs beschrieben, bei der einem als 3/2-Wege-Magnetschaltventil ausgebildeten ersten Steuerventil, über das mehrere, jeweils mit einem Niveauregelventil versehene und zu dem Federbalg einer zugeordneten Luftfeder führende Anschlussleitungen mit einer Druckquelle, wie z.B. einem Druckspeicher, oder einer Drucksenke, wie z.B. der Umgebung, verbindbar sind, in Belüftungsrichtung ein als 2/2-Wege-Magnetschaltventil ausgebildetes zweites Steuerventil nachgeschaltet ist. Das zweite Steuerventil ist in einer ersten Schaltstellung (Ruhestellung) ungedrosselt geöffnet und in einer zweiten Schaltstellung (Betätigungsstellung) mit einer Drosselquerschnittsfläche geöffnet. Durch die Betätigung des zweiten Steuerventils ist diese bekannte Luftfederungsanlage somit zwischen einer schnellen Be- und Entlüftung der Federbälge und einer langsamen Be- und Entlüftung der Federbälge umschaltbar. Allerdings kann die Drossel des zweiten Steuerventils nur für eine bestimmte Anzahl von Federbälgen, also für die langsame Be- und Entlüftung von z.B. zwei oder vier Federbälgen, ausgelegt sein und ist daher nur eingeschränkt nutzbar.

Schließlich ist aus der DE 102 23 405 B4 eine Luftfederungsanlage eines Kraftfahrzeugs bekannt, die weitgehend derjenigen aus der DE 198 35 491 C2 entspricht, bei der jedoch wie bei der Luftfederungsanlage nach der DE 100 04 880 A1 ein Druckspeicher vorgesehen ist, der über eine mit einem Speicherventil versehene Anschlussleitung mit der Hauptdruckleitung verbindbar und gegenüber dieser absperrbar ist. Eine erste Ausführungsform dieser bekannten Luftfederungsanlage gemäß der dortigen Fig. 1 unterscheidet sich demgegenüber dadurch, dass das Ablassventil nun als ein 2/2-Wege-Magnetschaltventil ausgebildet ist, und dass in dem zu der Drossel parallelen Leitungsabschnitt anstelle eines in einer Schaltstellung mit einer konstanten Drosselquerschnittsfläche versehenen Schaltventils nun ein Drosselventil mit steuerbarer Drosselquerschnittsfläche angeordnet ist. Durch die in begrenztem Umfang mögliche Verstellung der Drosselquerschnittsfläche kann der beim Be- und Entlüften von Federbälgen über den Lufttrockner ein- oder ausströmende Luftmassenstrom reguliert und damit die Anhebe- und Absenkgeschwindigkeit des Fahrzeugaufbaus z.B. an einer Fahrzeugachse oder an einer Fahrzeugseite bereichsweise gesteuert werden. Ein Drosselventil mit steuerbarer Drosselquerschnittsfläche stellt allerdings ein kompliziertes und aufwendig herstellbares Bauteil dar, das entsprechend teuer und störungsanfällig ist.

Grundsätzlich besteht bei den bekannten Luftfederungsanlagen somit das Problem, dass der Luftmassenstrom beim Belüften und Entlüften der Federbälge und damit die Anhebe- und Absenkgeschwindigkeit des Fahrzeugaufbaus nur unzureichend gesteuert bzw. variiert werden kann. Während bei der Niveauregelungsfunktion und zum Ausgleich von Leckageverlusten nur relativ geringe Luftmassenströme erforderlich sind, müssen zum schnellen Absenken und Anheben des Fahrzeugaufbaus relativ große Luftmassenströme in die betreffenden Federbälge geleitet oder aus diesen abgeführt werden. Dies ist bei den bislang bekannten Luftfederungsanlagen entweder nur unzureichend und in Verbindung mit Funktionsnachteilen bzw. Funktionseinschränkungen oder nur mit einem hohen apparativen Aufwand möglich.

Der vorliegenden Erfindung liegt daher die Aufgabe zugrunde, jeweils eine Luftfederungsanlage eines Kraftfahrzeugs der eingangs genannten Art vorzuschlagen, welche es bei kostengünstiger Herstellung auf einfache Weise ermöglicht, unterschiedliche Strömungsgeschwindigkeiten des Luftmassenstroms beim Be- und Entlüften der Federbälge von Luftfedern einzustellen. Des Weiteren soll jeweils ein Verfahren zur Steuerung einer derartigen Luftfederungsanlage beim Be- und Entlüften der Federbälge von Luftfedern angegeben werden.

Die erste gegenständliche Aufgabe ist in Verbindung mit den Merkmalen des Oberbegriffs des Anspruchs 1 dadurch gelöst, dass die Federbälge der mindestens an einer Fahrzeugachse oder an einer Fahrzeugseite angeordneten Luftfedern parallel zu ersten Anschlussleitungen jeweils zumindest über eine mit einem zweiten Niveauregelventil versehene zweite Anschlussleitung mit der Hauptdruckleitung verbindbar und gegenüber dieser absperrbar sind, dass die zweiten Niveauregelventile der betreffenden Federbälge jeweils gleich große Düsenquerschnittsflächen aufweisen wie die ersten Niveauregelventile, und dass den zweiten Niveauregelventilen in Belüftungsrichtung jeweils eine Drossel nachgeschaltet ist, deren Drosselquerschnittsfläche kleiner als die Düsenquerschnittsfläche des betreffenden zweiten Niveauregelventils ist.

Vorteilhafte Ausgestaltungen und Weiterbildungen der erfindungsgemäßen Luftfederungsanlage sind Gegenstand der Ansprüche 2 bis 4. Verfahrensangaben zur Steuerung der erfindungsgemäßen Luftfederungsanlage beim Be- und Entlüften der Federbälge von Luftfedern sind in den Ansprüchen 5 bis 7 angegeben.

Die Erfindung geht demnach aus von einer an sich bekannten Luftfederungsanlage eines Kraftfahrzeugs mit mehreren den Luftfedern mindestens einer Fahrzeugachse zugeordneten Federbälgen. Die Federbälge sind über jeweils mit einem Niveauregelventil versehene Anschlussleitungen mit einer Hauptdruckleitung verbindbar und gegenüber dieser absperrbar. Die Hauptdruckleitung ist über mindestens ein zugeordnetes Ventil, wie z.B. ein Schaltventil und/oder ein Rückschlagventil, wechselweise mit einer Druckluftquelle, die z.B. durch einen Kompressor und/oder einen Druckspeicher gebildet sein kann, und einer Druckluftsenke, d.h. der Umgebungsluft, verbindbar und gegenüber diesen absperrbar.

Um nun bei einer derartigen Luftfederungsanlage auf einfache und kostengünstige Weise die Möglichkeit zu schaffen, beim Be- und Entlüften der Federbälge von Luftfedern unterschiedliche Luftmassenströme und damit unterschiedliche Anhebe- und Absenkgeschwindigkeiten des Fahrzeugaufbaus an der betreffenden Fahrzeugachse oder Fahrzeugseite einzustellen, sind die Federbälge der mindestens an einer Fahrzeugachse oder an einer Fahrzeugseite angeordneten Luftfedern, idealerweise natürlich die Federbälge aller vorhandenen Luftfedern, parallel zu den ersten Anschlussleitungen jeweils zusätzlich zumindest über eine mit einem zweiten Niveauregelventil versehene zweite Anschlussleitung mit der Hauptdruckleitung verbindbar und gegenüber dieser absperrbar. Des weiteren ist hierzu vorgesehen, dass die zweiten Niveauregelventile der betreffenden Federbälge jeweils gleich große Düsenquerschnittsflächen aufweisen wie die ersten Niveauregelventile, und dass den zweiten Niveauregelventilen in Belüftungsrichtung jeweils eine Drossel nachgeschaltet ist, deren Drosselquerschnittsfläche bzw. Nennweite kleiner als die Düsenquerschnittsfläche bzw. die Nennweite des betreffenden zweiten Niveauregelventils ist.

Bei den jeweils zwei Niveauregelventilen handelt es sich üblicherweise um 2/2-Wege-Magnetschaltventile oder um durch ein Vorsteuerventil ansteuerbare druckgesteuerte 2/2-Wege-Schaltventile, die vorliegend völlig baugleich ausgeführt sind und somit in hoher Stückzahl hergestellt sowie entsprechend kostengünstig sind. Ebenso stellen die verwendeten Drosseln und Druckluftleitungen keinen nennenswerten Kostenfaktor dar. Der einzig mögliche Nachteil der erfindungsgemäßen Luftfederungsanlage besteht somit in dem Platzbedarf für die zusätzlichen Bauteile, d.h. die weiteren Anschlussleitungen, Niveauregelventile und Drosseln. Die erfindungsgemäße Ausstattung der Federbälge von Luftfedern eines Kraftfahrzeugs mit parallel angeordneten Anschlussleitungen und Niveauregelventilen muss nicht zwangsläufig an allen Luftfedern ausgeführt sein. Vielmehr ist es zweckmäßig, nur die Federbälge derjenigen Luftfedern damit auszurüsten, bei denen unterschiedliche Anhebe- und Absenkgeschwindigkeiten des Fahrzeugaufbaus tatsächlich benötigt werden, beispielsweise bei einem Lastkraftwagen mit festem Aufbau nur an den Luftfedern der Hinterachse zur Justierung der Ladebodenkante beim Be- und Entladen und bei einem Omnibus nur an den fahrbahnäußeren Luftfedern zum schnellen Absenken und Anheben der Einstiege an den Haltestellen.

Da der durch die zweiten Anschlussleitungen strömende Luftmassenstrom bei geöffneten zweiten Niveauregelventilen jeweils durch die diesen nachgeschalteten Drosseln bestimmt wird, ist der zu einem Federbalg einer Luftfeder strömende oder von diesem abströmende Luftmassenstrom somit auf einfache Weise durch die Öffnung nur des jeweils ersten Niveauregelventils, nur des jeweils zweiten Niveauregelventils, oder jeweils beider Niveauregelventile in drei Stufen steuerbar.

Zur Reduzierung des Montageaufwands ist bevorzugt vorgesehen, dass zumindest die zwei dem Federbalg einer einzigen Luftfeder zugeordneten Niveauregelventile und die dem betreffenden zweiten Niveauregelventil nachgeschaltete Drossel in einem gemeinsamen Ventilblock angeordnet sind. In diesem Fall würde somit zumindest ein Zweifach-Ventilblock zur Anwendung kommen. Es können aber auch die den Federbälgen mehrerer Luftfedern zugeordneten Niveauregelventile und weitere Schaltventile in einem gemeinsamen Ventilblock zusammengefasst sein. So ist es vorteilhaft, wenn z.B. die vier Niveauregelventile, die den zwei Federbälgen der beiden Luftfedern einer Fahrzeugachse zugeordnet sind, in einem gemeinsamen Vierfach-Ventilblock oder unter Einbeziehung des Speicherventils eines in der Nähe der Fahrzeugachse angeordneten Druckspeichers in einem gemeinsamen Fünffach-Ventilblock angeordnet sind.

Gemäß einer bevorzugten Ausführungsform ist der Ventilblock mit einem Anschlussdeckel versehen, der eine Anschlussbohrung für einen unmittelbaren Anschluss des jeweils ersten Niveauregelventils an den zugeordneten Federbalg, einen Abschlussdeckel anstelle einer Anschlussbohrung für einen unmittelbaren Anschluss des jeweils zweiten Niveauregelventils an einen zugeordneten Federbalg, und eine als Drosselbohrung ausgeführte Drossel zur balgseitig gedrosselten Verbindung des jeweils zweiten Niveauregelventils mit der Anschlussbohrung des jeweils ersten Niveauregelventils aufweist. Die erfindungsgemäße Ventilanordnung ist somit auf besonders einfache und kostengünstige Weise dadurch realisierbar, dass bei einem im wesentlichen unveränderten Ventilblock nur ein üblicherweise auch mit einer Anschlussbohrung für das jeweils zweite Niveauregelventil versehener Anschlussdeckel durch den erfindungsgemäß ausgebildeten, mit der Drosselbohrung und dem Abschlussdeckel für das jeweils zweite Niveauregelventil versehenen Anschlussdeckel ersetzt ist.

Zur Entfeuchtung der über einen Kompressor aus der Umgebung in die Hauptdruckleitung geförderten Druckluft ist dem Kompressor üblicherweise in Belüftungsrichtung ein Lufttrockner nachgeschaltet. Der Lufttrockner ist zumeist regenerativ ausgebildet und enthält hierzu z.B. ein regenerierbares Silikat-Granulat, das beispielsweise 20% seines Gewichtes an Wasser aufnehmen kann, und diese Feuchtigkeit beim Durchströmen in Entlüftungsrichtung wieder an die trockene Druckluft abgeben kann. Um die Entfeuchtung der Druckluft im Lufttrockner beim Belüften der Hauptdruckleitung und die Regeneration des Lufttrockners beim Entlüften der Hauptdruckleitung zu verbessern, kann dem Lufttrockner in an sich bekannter Weise in Belüftungsrichtung eine Drossel nachgeschaltet sein.

Damit diese Drossel aber die Steuerung des jeweiligen Luftmassenstroms über die Niveauregelventile nicht beeinträchtigt, muss die Drosselquerschnittsfläche dieser Drossel größer als die Summe der Düsenquerschnittsflächen der betreffenden ersten Niveauregelventile und der Drosselquerschnittsflächen der den betreffenden zweiten Niveauregelventilen nachgeschalteten Drosseln sein. Diese Bedingung ist dann erfüllt, wenn die Gleichung NW_{z} > (n_{FB} * (NW_{X}² + NW_{D}²))^{0,5} eingehalten wird, wobei mit NW_{X} die Nennweite der ersten Niveauregelventile, mit NW_{D} die Nennweite der den zweiten Niveauregelventilen nachgeschalteten Drosseln, mit NW_{Z} die Nennweite der dem Lufttrockner nachgeschalteten Drossel, und mit n_{FB} die Anzahl der Federbälge bezeichnet ist. Wenn die ersten Niveauregelventile eine Nennweite von NW_{X} = 8 mm und die den zweiten Niveauregelventilen nachgeschalteten Drosseln eine Nennweite von NW_{D} = 5 mm aufweisen, und zwei Federbälge von an einer Fahrzeugachse angeordneten Luftfedern vorhanden sind (n_{FB} = 2), sollte die Nennweite der dem Lufttrockner nachgeschalteten Drossel NW_{Z} somit größer als 13,3 mm sein (NW_{Z} > 13,3 mm), um dort eine unerwünschte Drosselung des Luftmassenstroms zu vermeiden.

Zur Steuerung einer Luftfederungsanlage eines Kraftfahrzeugs beim Be- und Entlüften von Federbälgen, die zumindest den an einer Fahrzeugachse oder an einer Fahrzeugseite angeordneten Luftfedern zugeordnet und jeweils über zwei parallele, jeweils mit einem Niveauregelventil versehene Anschlussleitungen mit einer Hauptdruckleitung verbindbar und gegenüber dieser absperrbar sind, wobei die jeweils zwei Niveauregelventile der betreffenden Federbälge gleich große Düsenquerschnittsflächen aufweisen (NW_{X} = NW_{Y}), und einem der zwei Niveauregelventile in Belüftungsrichtung jeweils eine Drossel nachgeschaltet ist, deren Drosselquerschnittsfläche NW_{D} kleiner als die Düsenquerschnittsfläche NW_{Y} des zugeordneten Niveauregelventils ist (NW_{D} < NW_{Y}), ist vorgesehen, dass bei einem langsamen Absenken oder Anheben des Fahrzeugaufbaus an mindestens einer der Fahrzeugachsen oder an einer Fahrzeugseite jeweils dasjenige Niveauregelventil der betreffenden Federbälge geöffnet wird, dem eine Drossel nachgeschaltet ist, dass bei einem Absenken oder Anheben des Fahrzeugaufbaus an mindestens einer der Fahrzeugachsen oder an einer Fahrzeugseite mit mittlerer Stellgeschwindigkeit jeweils dasjenige Niveauregelventil der betreffenden Federbälge geöffnet wird, dem keine Drossel nachgeschaltet ist, und dass bei einem schnellen Absenken oder Anheben des Fahrzeugaufbaus an mindestens einer der Fahrzeugachsen oder an einer Fahrzeugseite jeweils beide Niveauregelventile der betreffenden Federbälge geöffnet werden.

Die zweite gegenständliche Aufgabe der Erfindung ist erfindungsgemäß in Verbindung mit den Merkmalen des Oberbegriffs des Anspruchs 8 dadurch gelöst, dass die Federbälge der mindestens an einer Fahrzeugachse angeordneten Luftfedern parallel zu der ersten Anschlussleitung zumindest über eine mit einem zweiten Niveauregelventil versehene zweite Anschlussleitung mit der Hauptdruckleitung verbindbar und gegenüber dieser absperrbar sind, dass das zweite Niveauregelventil der betreffenden Federbälge eine gleich große Düsenquerschnittsfläche aufweist wie das erste Niveauregelventil, und dass dem zweiten Niveauregelventil in Belüftungsrichtung eine Drossel nachgeschaltet ist, deren Drosselquerschnittsfläche kleiner ist als die Düsenquerschnittsfläche des betreffenden zweiten Niveauregelventils.

Vorteilhafte Ausgestaltungen und Weiterbildungen der erfindungsgemäßen Luftfederungsanlage sind Gegenstand der Ansprüche 9 bis 11. Verfahrensangaben zur Steuerung dieser erfindungsgemäßen Luftfederungsanlage beim Be- und Entlüften der Federbälge von Luftfedern sind in den Ansprüchen 12 bis 14 angegeben.

Der zweite Teil der Erfindung geht demnach ebenfalls aus von einer an sich bekannten Luftfederungsanlage eines Kraftfahrzeugs mit mehreren den Luftfedern mindestens einer Fahrzeugachse zugeordneten Federbälgen. Im Gegensatz zu dem vorbeschriebenen ersten Teil der Erfindung sind nun aber mehrere Federbälge, die bevorzugt den an einer Fahrzeugachse angeordneten Luftfedern zugeordnet sind, gemeinsam über eine mit einem Niveauregelventil versehene Anschlussleitung mit einer Hauptdruckleitung verbindbar und gegenüber dieser absperrbar.

Um nun bei einer derartigen Luftfederungsanlage auf einfache und kostengünstige Weise die Möglichkeit zu schaffen, beim Be- und Entlüften der Federbälge von Luftfedern unterschiedliche Luftmassenströme und damit unterschiedliche Anhebe- und Absenkgeschwindigkeiten des Fahrzeugaufbaus an der betreffenden Fahrzeugachse einzustellen, sind die Federbälge der mindestens an einer Fahrzeugachse angeordneten Luftfedern parallel zu der ersten Anschlussleitung zumindest auch über eine mit einem zweiten Niveauregelventil versehene zweite Anschlussleitung mit der Hauptdruckleitung verbindbar und gegenüber dieser absperrbar. Des Weiteren ist hierzu vorgesehen, dass das zweite Niveauregelventil der betreffenden Federbälge eine gleich große Düsenquerschnittsfläche aufweist wie das erste Niveauregelventil, und dass dem zweiten Niveauregelventil in Belüftungsrichtung eine Drossel nachgeschaltet ist, deren Drosselquerschnittsfläche kleiner ist als die Düsenquerschnittsfläche des betreffenden zweiten Niveauregelventils.

Da der durch die zweite Anschlussleitung strömende Luftmassenstrom bei geöffnetem zweiten Niveauregelventil durch die diesem nachgeschaltete Drossel bestimmt wird, ist der zu den Federbälgen der betreffenden Luftfedern strömende oder von diesen abströmende Luftmassenstrom somit auf einfache Weise durch die Öffnung nur des ersten Niveauregelventils, nur des zweiten Niveauregelventils, oder beider Niveauregelventile in drei Stufen steuerbar.

Zur Reduzierung des Montageaufwands ist auch in diesem Fall bevorzugt vorgesehen, dass zumindest die zwei den Federbälgen der Luftfedern einer Fahrzeugachse zugeordneten Niveauregelventile und die dem betreffenden zweiten Niveauregelventil nachgeschaltete Drossel in einem gemeinsamen Ventilblock angeordnet sind.

Der Ventilblock ist wiederum bevorzugt mit einem Anschlussdeckel versehen, der eine Anschlussbohrung für einen unmittelbaren Anschluss des ersten Niveauregelventils an den zugeordneten Federbalg, einen Abschlussdeckel anstelle einer Anschlussbohrung für einen unmittelbaren Anschluss des zweiten Niveauregelventils an einen zugeordneten Federbalg, und eine als Drosselbohrung ausgeführte Drossel zur balgseitig gedrosselten Verbindung des zweiten Niveauregelventils mit der Anschlussbohrung des ersten Niveauregelventils aufweist. Somit kann auch die vorgesehene Ventilanordnung gemäß dem zweiten Teil der Erfindung auf besonders einfache und kostengünstige Weise realisiert werden.

Um auch in diesem Fall eine unerwünschte Drosselwirkung der einem Lufttrockner in Belüftungsrichtung nachgeschalteten Drossel zu vermeiden, sollte deren Drosselquerschnittsfläche größer als die Summe der Düsenquerschnittsflächen des betreffenden ersten Niveauregelventils und der Drosselquerschnittsfläche der dem betreffenden zweiten Niveauregelventil nachgeschalteten Drossel sein. Diese Bedingung ist dann erfüllt, wenn die Gleichung NW_{Z} > (NW_{X}² + NW_{D}²)^{0,5} eingehalten wird, wobei mit NW_{X} die Nennweite des ersten Niveauregelventils, mit NW_{D} die Nennweite der dem zweiten Niveauregelventil nachgeschalteten Drossel, und mit NW_{Z} die Nennweite der dem Lufttrockner nachgeschalteten Drossel bezeichnet ist. Wenn das erste Niveauregelventil eine Nennweite von NW_{X} = 8 mm und die dem zweiten Niveauregelventil nachgeschaltete Drossel eine Nennweite von NW_{D} = 5 mm aufweist, sollte die Nennweite der dem Lufttrockner nachgeschalteten Drossel NW_{z} somit größer als 9,4 mm sein (NW_{Z} > 9,4 mm), um dort eine unerwünschte Drosselung des Luftmassenstroms zu vermeiden.

Zur Steuerung einer Luftfederungsanlage eines Kraftfahrzeugs beim Be- und Entlüften von Federbälgen, die zumindest den an einer Fahrzeugachse angeordneten Luftfedern zugeordnet und gemeinsam über zwei parallele, jeweils mit einem Niveauregelventil versehene Anschlussleitungen mit einer Hauptdruckleitung verbindbar und gegenüber dieser absperrbar sind, wobei die zwei Niveauregelventile der betreffenden Federbälge gleich große Düsenquerschnittsflächen aufweisen, und einem der zwei Niveauregelventile in Belüftungsrichtung eine Drossel nachgeschaltet ist, deren Drosselquerschnittsfläche kleiner als die Düsenquerschnittsfläche des zugeordneten Niveauregelventils ist, ist vorgesehen, dass bei einem langsamen Absenken oder Anheben des Fahrzeugaufbaus an der betreffenden Fahrzeugachse dasjenige Niveauregelventil der Federbälge geöffnet wird, dem die Drossel nachgeschaltet ist, dass bei einem Absenken oder Anheben des Fahrzeugaufbaus an der betreffenden Fahrzeugachse mit mittlerer Stellgeschwindigkeit dasjenige Niveauregelventil der Federbälge geöffnet wird, dem keine Drossel nachgeschaltet ist, und dass bei einem schnellen Absenken oder Anheben des Fahrzeugaufbaus an der betreffenden Fahrzeugachse beide Niveauregelventile der Federbälge geöffnet werden.

Zur weiteren Verdeutlichung der Erfindung ist der Beschreibung eine Zeichnung mit mehreren Ausführungsbeispielen beigefügt. In diesen zeigt
Fig. 1 den schematischen Aufbau einer ersten Ausführungsform einer erfindungsgemäßen Luftfederungsanlage eines Kraftfahrzeugs,
Fig. 2 den schematischen Aufbau einer zweiten Ausführungsform einer erfindungsgemäßen Luftfederungsanlage eines Kraftfahrzeugs,
Fig. 3 den schematischen Aufbau einer bekannten ersten Luftfederungsanlage eines Kraftfahrzeugs,
Fig. 4 den schematischen Aufbau einer bekannten zweiten Luftfederungsanlage eines Kraftfahrzeugs,
Fig. 5 den schematischen Aufbau der Ventilanordnung einer dritten Ausführungsform einer erfindungsgemäßen Luftfederungsanlage eines Kraftfahrzeugs,
Fig. 6 den schematischen Aufbau der Ventilanordnung einer bekannten dritten Luftfederungsanlage eines Kraftfahrzeugs,
Fig. 7a in Form einer Tabelle das Schaltschema der erfindungsgemäßen Luftfederungsanlage nach Fig. 5,
Fig. 7b in Form eines Diagramms das Schaltschema der erfindungsgemäßen Luftfederungsanlage nach Fig. 5, und
Fig. 8 eine bevorzugte Ausführungsform eines Ventilblocks der erfindungsgemäßen Luftfederungsanlage nach den Figuren 1, 2 und 5.

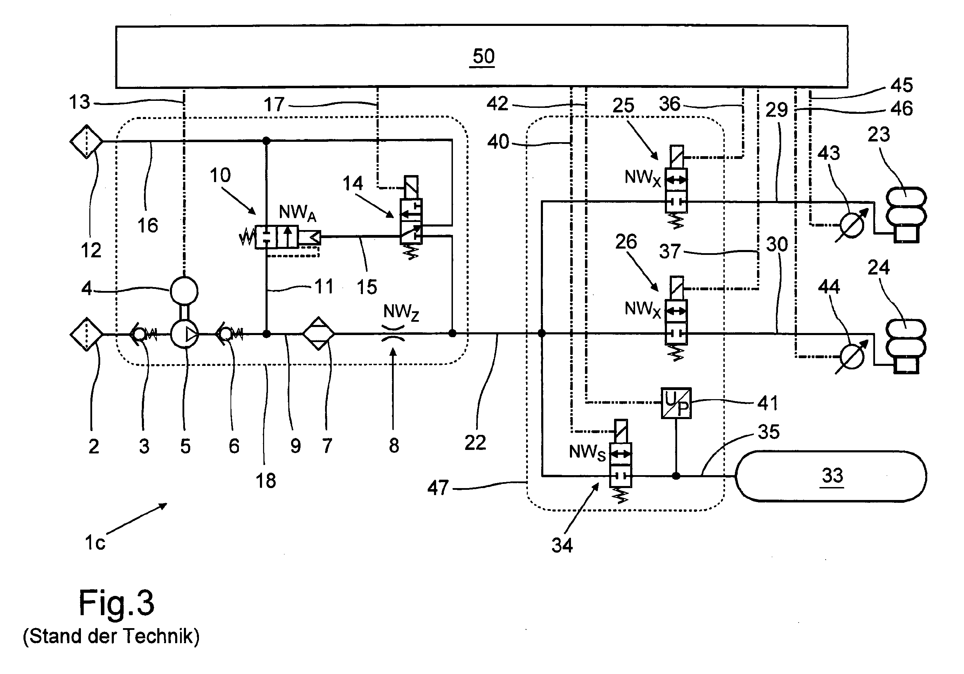

Eine in Fig. 3 in schematischer Form dargestellte bekannte Luftfederungsanlage 1c eines Kraftfahrzeugs weist beispielhaft zwei den beiden Luftfedern einer Fahrzeugachse zugeordnete Federbälge 23, 24 auf, die über jeweils mit einem Niveauregelventil 25, 26 versehene Anschlussleitungen 29, 30 mit einer Hauptdruckleitung 22 verbindbar und gegenüber dieser absperrbar sind. Die Niveauregelventile 25, 26 sind als 2/2-Wege-Magnetschaltventile ausgebildet, die in einer ersten Schaltstellung (Ruhestellung) geschlossen und in einer zweiten Schaltstellung (Betätigungsstellung) jeweils mit einer Düsenquerschnittsfläche der Nennweite NW_{X} geöffnet sind.

Zudem ist ein Druckspeicher 33 vorhanden, der über eine mit einem Speicherventil 34 versehene Anschlussleitung 35 mit der Hauptdruckleitung 22 verbindbar und gegenüber dieser absperrbar ist. Das Speicherventil 34 ist als ein 2/2-Wege-Magnetschaltventil ausgebildet, das in einer ersten Schaltstellung (Ruhestellung) geschlossen und in einer zweiten Schaltstellung (Betätigungsstellung) mit einer Düsenquerschnittsfläche der Nennweite NW_{S} geöffnet ist.

Die Elektromagneten der beiden Niveauregelventile 25, 26 und des Speicherventils 34 stehen über zugeordnete elektrische Steuerleitungen 36, 37, 40 mit einem elektronischen Steuergerät 50 in Verbindung. Zwischen dem Druckspeicher 33 und dem Speicherventil 34 ist ein Drucksensor 41 zur Erfassung des in dem Druckspeicher 33 herrschenden Speicherdruckes an die Anschlussleitung 35 angeschlossen, der über eine Sensorleitung 42 mit dem Steuergerät 50 verbunden ist. Nahe der die Federbälge 23, 24 aufweisenden Luftfedern ist jeweils ein Wegsensor 43, 44 zur Erfassung des Aufbauniveaus im Bereich der betreffenden Fahrzeugachse angeordnet, die über jeweils eine Sensorleitung 45, 46 mit dem Steuergerät 50 in Verbindung stehen. Die beiden Niveauregelventile 25, 26, das Speicherventil 34 und der Drucksensor 41 sind vorliegend beispielhaft in einem Dreifach-Ventilblock 47 angeordnet.

Die Hauptdruckleitung 22 ist über eine mit einem eingangsseitig angeordneten ersten Filter 2, einem ersten Rückschlagventil 3, einem von einem Elektromotor 4 antreibbaren Kompressor 5, einem zweiten Rückschlagventil 6, einem Lufttrockner 7 und einer diesem in Belüftungsrichtung nachgeschalteten Drossel 8 mit einer Drosselquerschnittsfläche der Nennweite NW_{Z} versehene Versorgungsleitung 9 belüftbar und über eine zwischen dem zweiten Rückschlagventil 6 und dem Lufttrockner 7 abzweigende und mit einem Ablassventil 10 versehene Entlüftungsleitung 11 mit einem endseitig angeordneten, auch als Schalldämpfer wirksamen zweiten Filter 12 entlüftbar. Der Elektromotor 4 des Kompressors 5 steht in nicht dargestellter Weise mit einer Stromversorgung und über eine elektrische Steuerleitung 13 mit dem Steuergerät 50 in Verbindung.

Das Ablassventil 10 ist als ein druckgesteuertes 2/2-Wege-Schaltventil mit einer Düsenquerschnittsfläche der Nennweite NW_{A} ausgebildet, das in einer ersten Schaltstellung (Ruhestellung) geschlossen und in einer zweiten Schaltstellung (Betätigungsstellung) geöffnet ist, und das eine Druckbegrenzungsfunktion für den in der Versorgungsleitung 9 herrschenden Druck aufweist. Das dem Ablassventil 10 zugeordnete Vorsteuerventil 14 ist als ein 3/2-Wege-Magnetschaltventil ausgebildet, das die betreffende pneumatische Steuerleitung 15 in einer ersten Schaltstellung (Ruhestellung) mit dem permanent drucklosen Abschnitt 16 der Entlüftungsleitung 11 und in einer zweiten Schaltstellung (Betätigungsstellung) mit der Hauptdruckleitung 22 verbindet. Der Elektromagnet des Vorsteuerventils 14 steht über eine elektrische Steuerleitung 17 mit dem Steuergerät 50 in Verbindung. Die beiden Rückschlagventile 3 und 6, der Kompressor 5 mit dem zugeordneten Elektromotor 4, der Lufttrockner 7, die Drossel 8 und das Ablassventil 10 mit dem zugeordneten Vorsteuerventil 14 sind vorliegend beispielhaft in einem Kompressormodul 18 zusammengefasst.

Die Belüftung der Federbälge 23, 24 kann über den Kompressor 5, aus dem Druckspeicher 33 oder gleichzeitig aus beiden Druckquellen erfolgen. Bei einer Belüftung der Federbälge 23, 24 über den Kompressor 5 wird dieser von dem Elektromotor 4 angetrieben und fördert durch die Versorgungsleitung 9 Druckluft aus der Umgebung über den Filter 2, die beiden Rückschlagventile 3 und 6, den Lufttrockner 7 und die Drossel 8 in die Hauptdruckleitung 22. Beim Durchströmen des Lufttrockners 7, der vorzugsweise ein regenerierbares Silikat-Granulat enthält, wird die Druckluft entfeuchtet, was durch den Druckanstieg vor der Drossel 8 verstärkt wird. Aus der Hauptdruckleitung 22 strömt die Druckluft über die Anschlussleitungen 29, 30 und die geöffneten Niveauregelventile 25, 26 in die Federbälge 23, 24.

Bei einer Belüftung der Federbälge 23, 24 aus dem Druckspeicher 33 strömt die dort unter hohem Druck gespeicherte Druckluft über die Anschlussleitung 35 und das geöffnete Speicherventil 34 in die Hauptdruckleitung 22 und von dort über die Anschlussleitungen 29, 30 und die geöffneten Niveauregelventile 25, 26 in die Federbälge 23, 24.

Bei einer Entlüftung der Federbälge 23, 24 strömt die Druckluft aus den Federbälgen 23, 24 über die Anschlussleitungen 29, 30 sowie die geöffneten Niveauregelventile 25, 26 in die Hauptdruckleitung 22, und von dort über die Drossel 8, den Lufttrockner 7, die Entlüftungsleitung 11, das geöffnete Ablassventil 10 und den auch als Schalldämpfer wirksamen Filter 12 in die Umgebung ab. Beim Durchströmen des Lufttrockners 7 durch die zuvor getrocknete Druckluft nimmt diese Feuchtigkeit aus dem Silikat-Granulat auf, wodurch der Lufttrockner 7 regeneriert wird. Die Regeneration des Lufttrockners 7 wird durch den Druckabfall der Druckluft über die Drossel 8 verstärkt.

Die Öffnung des Ablassventils 10 erfolgt dadurch, dass die zugeordnete pneumatische Steuerleitung 15, die im unbetätigten Zustand des Vorsteuerventils 14 an den permanent drucklosen Abschnitt 16 der Entlüftungsleitung 11 angeschlossen ist, durch die Umschaltung des Vorsteuerventils 14 an die druckführende Hauptdruckleitung 22 angeschlossen wird. Das Ablassventil 10 bleibt daher solange geöffnet, bis der in der Hauptdruckleitung 22 herrschende Druck einen Mindestwert unterschreitet oder das Vorsteuerventil 14 in die Ruhestellung umgeschaltet wird.

Aus dem Aufbau und der Funktionsbeschreibung der bekannten Luftfederungsanlage 1c gemäß Fig. 3 ist ersichtlich, dass der Luftmassenstrom beim Be- und Entlüften der Federbälge 23, 24 und damit die Stellgeschwindigkeit beim Anheben und Absenken des Fahrzeugaufbaus an der betreffenden Fahrzeugachse nur unzureichend gesteuert, d.h. in seiner Höhe einstellbar ist. Während der Luftmassenstrom bei der Belüftung der Federbälge 23, 24 in begrenztem Umfang durch den in der Hauptdruckleitung 22 eingestellten Druck beeinflussbar ist, ergibt sich der Luftmassenstrom beim Entlüften der Federbälge 23, 24 selbsttätig im wesentlichen aus dem in den Federbälgen 23, 24 herrschenden Druck und den Strömungswiderständen der Niveauregelventile 25, 26, der Drossel 8, des Lufttrockners 7, des Ablassventils 10 und des zweiten Filters 12.

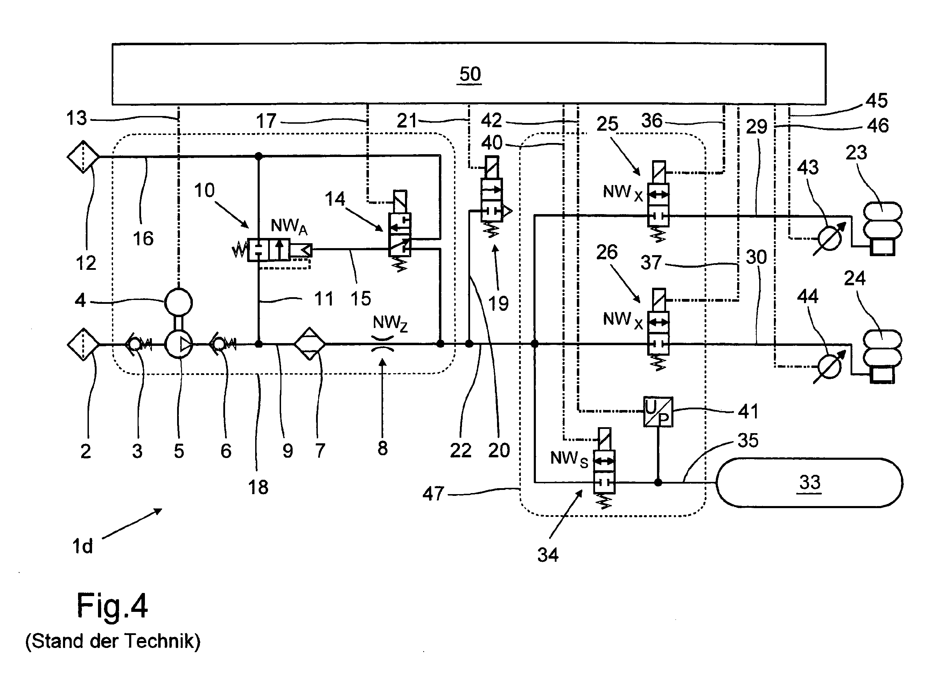

Zur zumindest teilweisen Behebung dieses Nachteils ist in der bekannten Luftfederungsanlage 1d, die in schematischer Form in Fig. 4 dargestellt ist und weitgehend der Luftfederungsanlage 1c nach Fig. 3 entspricht, zusätzlich ein Schnellablassventil 19 vorgesehen. Dieses Schnellablassventil 19 ist als ein 2/2-Wege-Magnetschaltventil ausgebildet ist, durch das eine an die Hauptdruckleitung 22 angeschlossene Schnellentlüftungsleitung 20 in einer ersten Schaltstellung (Ruhestellung) abgesperrt und in einer zweiten Schaltstellung (Betätigungsstellung) mit der Umgebung verbunden ist. Der Elektromagnet des Schnellablassventils 19 steht über eine elektrische Steuerleitung 21 mit dem Steuergerät 50 in Verbindung. Durch die Öffnung des Schnellablassventils 19 ist es somit möglich, Druckluft aus der Hauptdruckleitung 22 und bei geöffneten Niveauregelventilen 25, 26 auch aus den Federbälgen 23, 24 unter Umgehung der Drossel 8, des Lufttrockners 7, des Ablassventils 10 sowie des Filters 12 in die Umgebung abströmen zu lassen, und damit ein schnelles Absenken des Fahrzeugaufbaus an der betreffenden Fahrzeugachse zu bewirken. Nachteilig daran ist jedoch, dass die zuvor beim Belüften der Federbälge 23, 24 getrocknete Druckluft dabei ungenutzt entweicht, und der Lufttrockner 7 bzw. das in diesem befindliche Silikat-Granulat dadurch nicht regeneriert wird.

Demgegenüber weist eine erste Ausführungsform einer erfindungsgemäß ausgebildeten Luftfederungsanlage 1 a, die in schematischer Form in Fig. 1 dargestellt ist und auf der Luftfederungsanlage 1 c nach Fig. 3 basiert, eine einfach und kostengünstig realisierbare Lösung zur Verbesserung der Steuerbarkeit des Luftmassenstroms beim Be- und Entlüften der Luftfederbälge 23, 24 auf. Hierzu ist parallel zu den jeweils mit einem ersten Niveauregelventil 25, 26 versehenen ersten Anschlussleitungen 29, 30 eine jeweils mit einem zweiten Niveauregelventil 27, 28 versehene zweite Anschlussleitung 31, 32 zwischen der Hauptdruckleitung 22 und dem jeweils zugeordneten Federbalg 23, 24 angeordnet. Die zweiten Niveauregelventile 27, 28 sind baugleich wie die ersten Niveauregelventilen 25, 26 ausgeführt, d.h. als 2/2-Wege-Magnetschaltventile ausgebildet, die in einer ersten Schaltstellung (Ruhestellung) geschlossen und in einer zweiten Schaltstellung (Betätigungsstellung) jeweils mit einer Düsenquerschnittsfläche der Nennweite NW_{Y} geöffnet sind.

Erfindungsgemäß entsprechen die zweiten Niveauregelventile 27, 28 exakt den ersten Niveauregelventilen 25, 26, d.h. die Düsenquerschnittsflächen der zweiten Niveauregelventile 27, 28 bzw. deren Nennweiten NW_{Y} sind gleich groß wie die Düsenquerschnittsflächen der ersten Niveauregelventile 25, 26 bzw. deren Nennweiten NW_{X} (NW_{Y} = NW_{X}). Den zweiten Niveauregelventilen 27, 28 ist jedoch in Belüftungsrichtung jeweils eine Drossel 51, 52 mit einer Drosselquerschnittsfläche der Nennweite NW_{D} nachgeschaltet, die kleiner ist als die Nennweite NW_{Y} des jeweils zugeordneten zweiten Niveauregelventils 27, 28 (NW_{D} < NW_{Y}). Demzufolge erfolgt bei geöffneten zweiten Niveauregelventilen 27, 28 die Drosselung des Luftmassenstroms in den zweiten Anschlussleitungen 31, 32 jeweils durch die Drossel 51, 52 bzw. deren Drosselquerschnittsfläche und nicht durch die Düse des betreffenden Niveauregelventils 27, 28 bzw. deren Düsenquerschnittsfläche. Die Elektromagneten der zweiten Niveauregelventile 27, 28 stehen über jeweils eine zugeordnete elektrische Steuerleitung 38, 39 mit dem Steuergerät 50 in Verbindung.

Durch die singuläre oder kombinierte Öffnung der jeweils einem Federbalg 23, 24 zugeordneten Niveauregelventile 25, 27 bzw. 26, 28 können somit mehrere Düsen- bzw. Drosselquerschnittsflächen freigeschaltet und demzufolge beim Be- und Entlüften der Federbälge 23, 24 unterschiedliche Luftmassenströme eingestellt werden. Durch das Öffnen jeweils nur eines der beiden Niveauregelventile (25 oder 27; 26 oder 28) und durch das Öffnen jeweils beider Niveauregelventile (25 und 27; 26 und 28) können demnach effektiv drei unterschiedlich große Düsen- bzw. Drosselquerschnittsflächen freigeschaltet und demzufolge drei Anhebe- und Absenkgeschwindigkeiten des Fahrzeugaufbaus an der betreffenden Fahrzeugachse eingestellt werden. Bei der erfindungsgemäßen Luftfederungsanlage 1a gemäß Fig. 1 sind die Niveauregelventile 25, 26, 27, 28, das Speicherventil 34 sowie der Drucksensor 41 beispielhaft in einem Fünffach-Ventilblock 49 zusammengefasst.

Aufgrund der durch die erfindungsgemäße Ausbildung verbesserten Steuerbarkeit der Luftfederungsanlage 1 a kann bedarfsweise auf den Druckspeicher 33, das zugeordnete Speicherventil 34 sowie den Drucksensor 41 verzichtet werden. Eine entsprechend vereinfachte zweite Ausführungsform der erfindungsgemäßen Luftfederungsanlage 1 b ist in schematischer Form in Fig. 2 dargestellt. Aufgrund der eingesparten Bauteile sind nun die Niveauregelventile 25, 26, 27, 28 beispielhaft in einem Vierfach-Ventilblock 48 zusammengefasst.

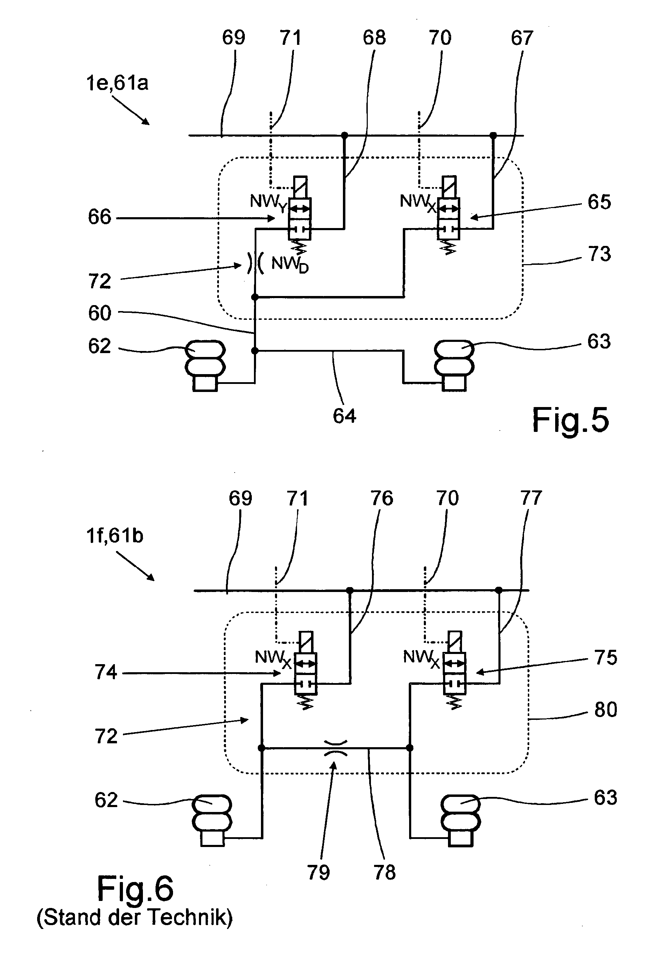

Bei einer Ventilanordnung 61 a einer erfindungsgemäßen Luftfederungsanlage 1e eines Kraftfahrzeugs, die in Fig. 5 in schematischer Form abgebildet ist, stehen zwei den beiden Luftfedern einer Fahrzeugachse zugeordnete Federbälge 62, 63 über eine Verbindungsleitung 64 unmittelbar miteinander in Verbindung. Beide Federbälge 62, 63 sind gemeinsam über zwei parallele, jeweils mit einem Niveauregelventil 65, 66 versehene Anschlussleitungen 67, 68 mit einer Hauptdruckleitung 69 verbindbar und gegenüber dieser absperrbar.

Die beiden Niveauregelventile 65, 66 sind vorliegend als 2/2-Wege-Magnetschaltventile ausgebildet, die in einer ersten Schaltstellung (Ruhestellung) geschlossen und in einer zweiten Schaltstellung (Betätigungsstellung) mit einer Düsenquerschnittsfläche der Nennweite NW_{X} bzw. NW_{Y} geöffnet sind. Die Elektromagneten der beiden Niveauregelventile 65, 66 stehen über zugeordnete elektrische Steuerleitungen 70, 71 mit einem nicht abgebildeten elektronischen Steuergerät in Verbindung.

Die Düsenquerschnittsflächen der beiden Niveauregelventile 65, 66 bzw. deren Nennweiten NW_{X}, NW_{Y} sind erfindungsgemäß gleich groß ausgebildet (NW_{X} = NW_{Y}), was mit Kostenvorteilen für Beschaffung und Logistik verbunden ist. Dem zweiten der beiden Niveauregelventile 66 ist jedoch in Belüftungsrichtung eine Drossel 72 nachgeschaltet, deren Drosselquerschnittsfläche bzw. dessen Nennweite NW_{D} kleiner ist als die Düsenquerschnittsfläche bzw. dessen Nennweite NW_{Y} des zugeordneten Niveauregelventils 66 (NW_{D} < NW_{Y}). Die Niveauregelventile 65, 66 und die Drossel 72 sind beispielhaft in einem Zweifach-Ventilblock 73 zusammengefasst.

Durch die singuläre oder kombinierte Öffnung der den beiden Federbälgen 62, 63 zugeordneten Niveauregelventile 65, 66 können somit mehrere Düsen- bzw. Drosselquerschnittsflächen freigeschaltet und demzufolge beim Be- und Entlüften der Federbälge 62, 63 unterschiedliche Luftmassenströme eingestellt werden. Durch das Öffnen nur eines der beiden Niveauregelventile (65 oder 66) und durch das Öffnen jeweils beider Niveauregelventile (65 und 66) können demnach effektiv drei unterschiedlich große Düsen- bzw. Drosselquerschnittsflächen freigeschaltet und demzufolge drei Anhebe- und Absenkgeschwindigkeiten des Fahrzeugaufbaus an der betreffenden Fahrzeugachse eingestellt werden.

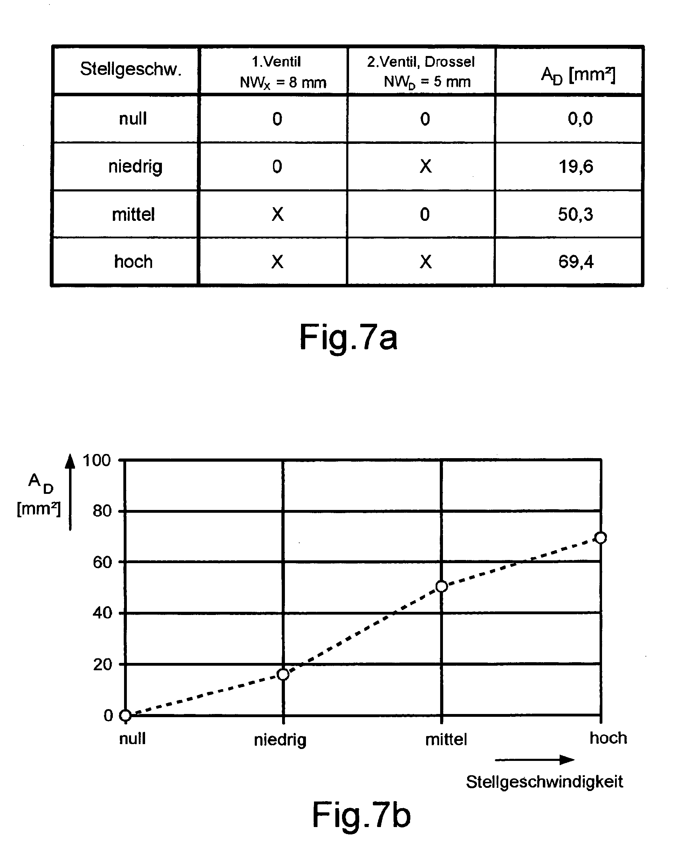

In einem Anwendungsbeispiel für die Hinterachse eines schweren Nutzfahrzeugs beträgt die Nennweite NW_{X} der Düsenquerschnittsfläche A_{D} in dem ersten Niveauregelventil 65 angenommene 8 mm (NW_{X} = 8 mm) und die Nennweite NW_{D} der Drosselquerschnittsfläche A_{D} in der dem zweiten Niveauregelventil 66 nachgeschalteten Drossel 72 angenommene 5 mm (NW_{D} = 5 mm). Die bei diesem Ausführungsbeispiel einstellbaren drei unterschiedlich großen Düsen- bzw. Drosselquerschnittsflächen (A_{D} = 19,6 mm², A_{D} = 50,3 mm², A_{D} = 69,4 mm²) sind in Form eines Schaltschemas in der Tabelle von Fig. 7a und in Form eines Diagramms in Fig. 7b dargestellt.

Die Ventilanordnung 61a gemäß Fig. 5 ist ohne wesentlichen Mehraufwand aus einer Ventilanordnung 61b einer bekannten Luftfederungsanlage 1f eines Kraftfahrzeugs gemäß Fig. 6 ableitbar. Bei dieser bekannten Luftfederungsanlage 1f sind beide Federbälge 62, 63 einer Fahrzeugachse über eine mit einem Niveauregelventil 74, 75 versehene Anschlussleitung 76, 77 mit der Hauptdruckleitung 69 verbunden, und die beiden Federbälge 62, 63 stehen über eine Verbindungsleitung 78 sowie eine darin angeordnete Querdrossel 79 miteinander in Verbindung. Die Niveauregelventile 74, 75 und die Verbindungsleitung 78 mit der Querdrossel 79 sind beispielhaft in einem Zweifach-Ventilblock 80 zusammengefasst.

Bei dieser bekannten Ventilanordnung 61 b ist für jeden der beiden Federbälge 62, 63 über das jeweils zugeordnete Niveauregelventil 74, 75 nur eine Düsenquerschnittsfläche der Nennweite NW_{X} zu öffnen und damit im Prinzip nur eine einzige Anhebe- und Absenkgeschwindigkeit des Fahrzeugaufbaus an der betreffenden Fahrzeugachse einstellbar. Aufgrund der separaten Verbindbarkeit der beiden Federbälge 62, 63 mit einer Druckquelle und einer Drucksenke sowie deren gedrosselten Verbindung über die Querdrossel 79 ist mit dieser Ventilanordnung 61 b aber vorteilhaft ein Ausgleich des Aufbauniveaus bei seitlich ungleicher Lastverteilung möglich.

Um aus der bekannten Ventilanordnung 61 b gemäß Fig. 6 die erfindungsgemäße Ventilanordnung 61a gemäß Fig. 5 zu schaffen, sind herstellungstechnisch nur geringe Änderungen, insbesondere kein zusätzliches Schaltventil, innerhalb und außerhalb des betreffenden Ventilblocks 80 erforderlich. So wird dem einen Niveauregelventil 66 in Belüftungsrichtung eine Drossel 72 nachgeschaltet, und die Anschlussleitung 68 dieses Niveauregelventils 66 hinter der Drossel 72 mit der Anschlussleitung 67 des anderen Niveauregelventils 65 zusammengeführt. Zudem ist die gedrosselte Querverbindung der Federbälge 62, 63 über die Verbindungsleitung 78 und die Querdrossel 79 bei der bekannten Ventilanordnung 61b gemäß Fig. 6 durch eine unmittelbare Verbindung der Federbälge 62, 63 über die Verbindungsleitung 64 in der erfindungsgemäßen Ventilanordnung 61a gemäß Fig. 5 ersetzt. Die Ventilanordnung 61a weist daher den Vorteil auf, dass der die beiden Niveauregelventile 65, 66 und die Drossel 72 aufnehmende Zweifach-Ventilblock 73 nur einen einzigen Anschluss für eine zu den beiden Federbälgen 62, 63 führende Verteilerleitung 60 benötigt.

Die Ventilanordnung 61a gemäß Fig. 5 weist gegenüber der bekannten Ventilanordnung 61b gemäß Fig. 6 außerdem den Vorteil von drei einstellbaren Anhebe- und Absenkgeschwindigkeiten des Fahrzeugaufbaus an der betreffenden Fahrzeugachse auf. Sie ist jedoch mit dem Nachteil eines nicht mehr möglichen gedrosselten Ausgleichs des Aufbauniveaus bei seitlich ungleicher Lastverteilung verbunden.

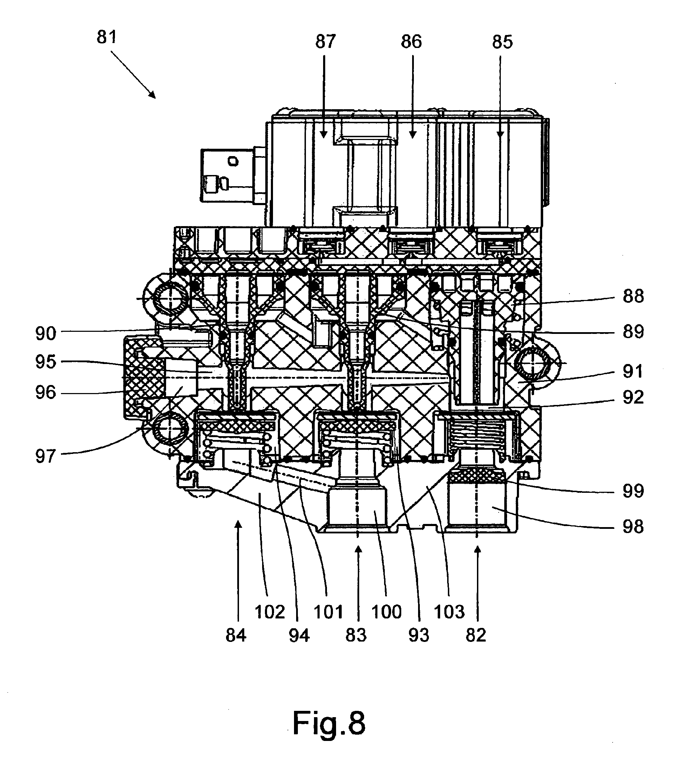

Eine bevorzugte praktische Ausführungsform der erfindungsgemäßen Ventilanordnungen der Luftfederungsanlagen 1a und 1b der Figuren 1 und 2 sowie der erfindungsgemäßen Ventilanordnung 61 a gemäß Fig. 5 ist in der Schnittansicht von Fig. 8 beispielhaft anhand eines Dreifach-Ventilblockes 81 dargestellt, aber in gleicher Weise auch in einem Zweifach-, Vierfach-, oder Fünffach-Ventilblock realisierbar.

In dem Ventilblock 81 gemäß Fig. 8 sind achsparallel drei Schaltventile 82, 83, 84 angeordnet, die beispielhaft als vorgesteuerte Sitzventile ausgebildet sind. Die Schaltventile 82, 83, 84 sind von jeweils einem als 3/2-Wege-Magnetschaltventil ausgebildeten Vorsteuerventil 85, 86, 87 über jeweils einen zugeordneten Steuerkolben 88, 89, 90 ansteuerbar, indem dieser Steuerkolben jeweils von dem zugeordneten Vorsteuerventil 85, 86, 87 in einer ersten Schaltstellung (Ruhestellung) mit einem niedrigen Druck (Umgebungsdruck) und in einer zweiten Schaltstellung (Betätigungsstellung) mit einem hohen Druck (Hauptdruck) beaufschlagt wird.

Derartige vorgesteuerte Sitzventile kommen bevorzugt dann zur Anwendung, wenn relativ große Strömungsquerschnitte in Verbindung mit entsprechend hohen Strömungskräften mit einem relativ niedrigen Steuerstrom geschaltet, d.h. geöffnet oder geschlossen werden sollen. Dies kann auch bei den Luftfederungsanlagen 1a, 1b gemäß den Figuren 1 und 2 und bei der Ventilanordnung 61a gemäß Fig. 5 der Fall sein, sofern diese bei einem schweren Nutzfahrzeug zur Anwendung kommen.

Der Ventilblock 81 weist ein Gehäuse 91 mit drei abgestuften vertikalen Bohrungen 92, 93, 94 und mit einer diese schneidenden horizontalen Bohrung 95 auf. In den vertikalen Bohrungen 92, 93, 94 sind jeweils die als Sitzventile ausgebildeten Schaltventile 82, 83, 84 sowie die diesen zugeordneten Steuerkolben 88, 89, 90 angeordnet. Die horizontale Bohrung 95 bildet einen Hauptdruckkanal, welcher der Hauptdruckleitung 22, 69 gemäß den Figuren 1, 2 und 5 entspricht oder an diese angeschlossen ist. Eine in Fig. 8 durch einen Deckel 96 verschlossene Anschlussbohrung 97 ermöglicht z.B. den Anschluss eines weiteren Ventilblockes an den Hauptdruckkanal 95.

Das in Fig. 8 rechts abgebildete Schaltventil 82 ist als ein 3/2-Wege-Schaltventil ausgebildet, durch das der Hauptdruckkanal 95 im eingebauten Zustand des Ventilblockes 81 in einer ersten Schaltstellung (Ruhestellung) mit der Umgebung verbunden, d.h. drucklos geschaltet ist, und in einer zweiten Schaltstellung (Betätigungsstellung) mit einem an eine zugeordnete Anschlussbohrung 98 angeschlossenen Druckspeicher verbunden ist. Das Schaltventil 82 vereinigt somit beispielsweise die Funktionen des Ablassventils 10 und des Speicherventils 34 der Luftfederungsanlage 1a nach Fig. 1 in sich. In die Anschlussbohrung 98 des Schaltventils 82 für den Anschluss des Druckspeichers ist vorliegend ein Filter 99 eingesetzt.

Das in Fig. 8 mittig angeordnete Schaltventil 83 ist als ein 2/2-Wege-Schaltventil ausgebildet, durch das eine zugeordnete Anschlussbohrung 100, die für den Anschluss mindestens eines Federbalgs vorgesehen ist, in einer ersten Schaltstellung (Ruhestellung) gegenüber dem Hauptdruckkanal 95 abgesperrt und in einer zweiten Schaltstellung (Betätigungsstellung) mit dem Hauptdruckkanal 95 verbunden ist.

Das in Fig. 8 links angeordnete Schaltventil 84 ist ebenfalls als ein 2/2-Wege-Schaltventil ausgebildet, durch das die Anschlussbohrung 100 des mittleren Schaltventils 83 über eine als Drosselbohrung ausgeführte Drossel 101 in einer ersten Schaltstellung (Ruhestellung) gegenüber dem Hauptdruckkanal 95 abgesperrt und in einer zweiten Schaltstellung (Betätigungsstellung) mit dem Hauptdruckkanal 95 verbunden ist.

Anstelle einer normalerweise vorhandenen Anschlussbohrung des linken Schaltventils 84 ist vorliegend ein Abschlussdeckel 102 vorgesehen. Die Drossel 101 und der Abschlussdeckel 102 sind integraler Bestandteil eines Anschlussdeckels 103, der das Gehäuse 91 des Ventilblockes 81 nach unten abschließt und in dem die Anschlussbohrungen 98, 100 des rechten Schaltventils 82 und des mittleren Schaltventils 83 angeordnet sind.

Funktional entspricht das mittlere Schaltventil 83 somit einem der ersten Niveauregelventile 25, 26 der Luftfederungsanlagen 1a, 1b gemäß den Figuren 1 und 2 sowie dem ersten Niveauregelventil 65 der Ventilanordnung 61 a gemäß Fig. 5. Ebenso entspricht das linke Schaltventil 84 mit der in Belüftungsrichtung nachgeschalteten Drossel 101 einem der zweiten Niveauregelventile 27, 28 mit der jeweils in Belüftungsrichtung nachgeschalteten Drossel 51, 52 der Luftfederungsanlagen 1a, 1b gemäß den Figuren 1 und 2 sowie dem zweiten Niveauregelventil 66 mit der nachgeschalteten Drossel 72 der Ventilanordnung 61 a gemäß Fig. 5.

Die erfindungsgemäße Funktion einer ersten schaltbaren ungedrosselten Verbindung und einer dazu parallelen zweiten schaltbaren gedrosselten Verbindung eines zugeordneten Federbalgs (23; 24) oder mehrerer zugeordneter Federbälge (62, 63) mit einer Hauptdruckleitung (22; 69) bzw. einem Hauptdruckkanal 95 ist vorliegend erfindungsgemäß auf besonders einfache und kostengünstige Weise dadurch realisiert, dass ein üblicherweise auch mit einer Anschlussbohrung für das linke Schaltventil 84 versehener Anschlussdeckel durch den erfindungsgemäß ausgebildeten, mit der Drosselbohrung 101 und dem Abschlussdeckel 102 für das linke Schaltventil 84 versehenen Anschlussdeckel 103 ersetzt ist.

### Bezugszeichen

- 1a - 1f: Luftfederungsanlage
- 2: Erster Filter
- 3: Erstes Rückschlagventil
- 4: Elektromotor
- 5: Kompressor
- 6: Zweites Rückschlagventil
- 7: Lufttrockner
- 8: Drossel
- 9: Versorgungsleitung
- 10: Ablassventil
- 11: Entlüftungsleitung
- 12: Zweiter Filter
- 13: Elektrische Steuerleitung
- 14: Vorsteuerventil
- 15: Pneumatische Steuerleitung
- 16: Druckloser Abschnitt
- 17: Elektrische Steuerleitung
- 18: Kompressormodul
- 19: Schnellablassventil
- 20: Schnellentlüftungsleitung
- 21: Elektrische Steuerleitung
- 22: Hauptdruckleitung
- 23: Federbalg
- 24: Federbalg
- 25: Erstes Niveauregelventil
- 26: Erstes Niveauregelventil
- 27: Zweites Niveauregelventil
- 28: Zweites Niveauregelventil
- 29: Erste Anschlussleitung
- 30: Erste Anschlussleitung
- 31: Zweite Anschlussleitung
- 32: Zweite Anschlussleitung
- 33: Druckspeicher
- 34: Speicherventil
- 35: Anschlussleitung
- 36: Elektrische Steuerleitung
- 37: Elektrische Steuerleitung
- 38: Elektrische Steuerleitung
- 39: Elektrische Steuerleitung
- 40: Elektrische Steuerleitung
- 41: Drucksensor
- 42: Sensorleitung
- 43: Wegsensor
- 44: Wegsensor
- 45: Sensorleitung
- 46: Sensorleitung
- 47: Dreifach-Ventilblock
- 48: Vierfach-Ventilblock
- 49: Fünffach-Ventilblock
- 50: Steuergerät
- 51: Drossel
- 52: Drossel
- 60: Verteilerleitung
- 61a: Ventilanordnung
- 61b: Ventilanordnung
- 62: Federbalg
- 63: Federbalg
- 64: Verbindungsleitung
- 65: Erstes Niveauregelventil
- 66: Zweites Niveauregelventil
- 67: Erste Anschlussleitung
- 68: Zweite Anschlussleitung
- 69: Hauptdruckleitung
- 70: Elektrische Steuerleitung
- 71: Elektrische Steuerleitung
- 72: Drossel
- 73: Zweifach-Ventilblock
- 74: Niveauregelventil
- 75: Niveauregelventil
- 76: Anschlussleitung
- 77: Anschlussleitung
- 78: Verbindungsleitung
- 79: Querdrossel
- 80: Zweifach-Ventilblock
- 81: Dreifach-Ventilblock
- 82: Schaltventil, Sitzventil
- 83: Schaltventil, Sitzventil, erstes Niveauregelventil
- 84: Schaltventil, Sitzventil, zweites Niveauregelventil
- 85: Vorsteuerventil
- 86: Erstes Vorsteuerventil
- 87: Zweites Vorsteuerventil
- 88: Steuerkolben
- 89: Erster Steuerkolben
- 90: Zweiter Steuerkolben
- 91: Gehäuse
- 92: Vertikale Bohrung
- 93: Erste vertikale Bohrung
- 94: Zweite vertikale Bohrung
- 95: Horizontale Bohrung, Hauptdruckkanal
- 96: Deckel
- 97: Anschlussbohrung
- 98: Anschlussbohrung
- 99: Filter
- 100: Anschlussbohrung
- 101: Drossel, Drosselbohrung
- 102: Abschlussdeckel
- 103: Anschlussdeckel
- A_{D}: Düsenquerschnittsfläche, Drosselquerschnittsfläche
- n_{FB}: Anzahl der Federbälge
- NW_{A}: Nennweite der Düsenquerschnittsfläche vom Ablassventil 10
- NW_{D}: Nennweite der Drosselquerschnittsfläche der Drosseln 51, 52, 72, 101
- NW_{S}: Nennweite der Düsenquerschnittsfläche des Speicherventils 34
- NW_{X}: Nennweite der Düsenquerschnittsfläche der Ventile 25, 26, 65, 83
- NW_{Y}: Nennweite der Düsenquerschnittsfläche der Ventile 27, 28, 66, 84
- NW_{Z}: Nennweite der Drosselquerschnittsfläche von der Drossel 8

## Patentansprüche

1. Luftfederungsanlage (1a, 1b, 1e) eines Kraftfahrzeugs, mit mehreren den Luftfedern mindestens einer Fahrzeugachse zugeordneten Federbälgen (23, 24), die über jeweils mit einem Niveauregelventil (25, 26; 83) versehene Anschlussleitungen (29, 30) mit einer Hauptdruckleitung (22; 95) verbindbar und gegenüber dieser absperrbar sind, wobei die Hauptdruckleitung (22; 95) über mindestens ein zugeordnetes Ventil (3, 6, 10, 34; 82) wechselweise mit einer Druckluftquelle und einer Druckluftsenke verbindbar sowie gegenüber diesen absperrbar ist, **dadurch gekennzeichnet, dass** die Federbälge (23; 24) der mindestens an einer Fahrzeugachse oder an einer Fahrzeugseite angeordneten Luftfedern parallel zu den ersten Anschlussleitungen (29; 30) jeweils zumindest über eine mit einem zweiten Niveauregelventil (27; 28; 84) versehene zweite Anschlussleitung (31; 32) mit der Hauptdruckleitung (22; 95) verbindbar und gegenüber dieser absperrbar sind, dass die zweiten Niveauregelventile (27; 28; 84) der betreffenden Federbälge (23; 24) jeweils gleich große Düsenquerschnittsflächen (NW_{X} = NW_{Y}) aufweisen wie die ersten Niveauregelventile (25; 26; 83), und dass den zweiten Niveauregelventilen (27; 28; 84) in Belüftungsrichtung jeweils eine Drossel (51; 52; 101) nachgeschaltet ist, deren Drosselquerschnittsfläche (NW_{D}) kleiner als die Düsenquerschnittsfläche (NW_{Y}) des betreffenden zweiten Niveauregelventils (27; 28; 84) ist (NW_{D} < NW_{Y}).

2. Luftfederungsanlage nach Anspruch 1, **dadurch gekennzeichnet, dass** zumindest die zwei dem Federbalg (23; 24) einer einzigen Luftfeder zugeordneten Niveauregelventile (25, 27; 26, 28; 83, 84) und die dem betreffenden zweiten Niveauregelventil (27; 28; 84) nachgeschaltete Drossel (51; 52; 101) in einem gemeinsamen Ventilblock (48, 49; 81) angeordnet sind.

3. Luftfederungsanlage nach Anspruch 2, **dadurch gekennzeichnet, dass** der Ventilblock (81) mit einem Anschlussdeckel (103) versehen ist, der eine Anschlussbohrung (100) für einen unmittelbaren Anschluss des jeweils ersten Niveauregelventils (83) an den zugeordneten Federbalg, einen Abschlussdeckel (102) anstelle einer Anschlussbohrung für einen unmittelbaren Anschluss des jeweils zweiten Niveauregelventils (84) an einen zugeordneten Federbalg, und eine als Drosselbohrung ausgeführte Drossel (101) zur balgseitig gedrosselten Verbindung des jeweils zweiten Niveauregelventils (84) mit der Anschlussbohrung (100) des jeweils ersten Niveauregelventils (83) aufweist.

4. Luftfederungsanlage nach einem der Ansprüche 1 bis 3, **dadurch gekennzeichnet, dass** einem Lufttrockner (7) in Belüftungsrichtung eine Drossel (8) nachgeschaltet ist, deren Drosselquerschnittsfläche größer als die Summe der Düsenquerschnittsflächen der betreffenden ersten Niveauregelventile (25, 26) und der Drosselquerschnittsflächen der den betreffenden zweiten Niveauregelventilen (27, 28) nachgeschalteten Drosseln (51, 52) ist (NW_{Z} > (n_{FB} * (NW_{X}² + NW_{D}²))^{0,5}).

5. Verfahren zur Steuerung einer Luftfederungsanlage eines Kraftfahrzeugs beim Be- und Entlüften von Federbälgen (23; 24), die zumindest den an einer Fahrzeugachse oder an einer Fahrzeugseite angeordneten Luftfedern zugeordnet und jeweils über zwei parallele, jeweils mit einem Niveauregelventil (25, 27; 26, 28) versehene Anschlussleitungen (29, 31; 30, 32) mit einer Hauptdruckleitung (22) verbindbar und gegenüber dieser absperrbar sind, wobei die jeweils zwei Niveauregelventile (25, 27; 26, 28) der betreffenden Federbälge (23; 24) gleich große Düsenquerschnittsflächen aufweisen (NW_{X} = NW_{Y}), und einem der zwei Niveauregelventile (27; 28) in Belüftungsrichtung jeweils eine Drossel (51; 52) nachgeschaltet ist, deren Drosselquerschnittsfläche (NW_{D}) kleiner als die Düsenquerschnittsfläche (NW_{Y}) des zugeordneten Niveauregelventils (27; 28) ist (NW_{D} < NW_{Y}), **dadurch gekennzeichnet, dass** bei einem langsamen Absenken oder Anheben des Fahrzeugaufbaus an mindestens einer der Fahrzeugachsen oder an einer Fahrzeugseite jeweils dasjenige Niveauregelventil (27; 28) der betreffenden Federbälge (23; 24) geöffnet wird, dem eine Drossel (51; 52) nachgeschaltet ist.

6. Verfahren zur Steuerung einer Luftfederungsanlage nach Anspruch 5, **dadurch gekennzeichnet, dass** bei einem Absenken oder Anheben des Fahrzeugaufbaus an mindestens einer der Fahrzeugachsen oder an einer Fahrzeugseite mit mittlerer Stellgeschwindigkeit jeweils dasjenige Niveauregelventil (25; 26) der betreffenden Federbälge (23; 24) geöffnet wird, dem keine Drossel nachgeschaltet ist.

7. Verfahren zur Steuerung einer Luftfederungsanlage nach Anspruch 5, **dadurch gekennzeichnet, dass** bei einem schnellen Absenken oder Anheben des Fahrzeugaufbaus an mindestens einer der Fahrzeugachsen oder an einer Fahrzeugseite jeweils beide Niveauregelventile (25 und 27; 26 und 28) der betreffenden Federbälge (23; 24) geöffnet werden.

8. Luftfederungsanlage eines Kraftfahrzeugs, mit mehreren den Luftfedern mindestens einer Fahrzeugachse zugeordneten Federbälgen (62, 63), die gemeinsam über eine mit einem Niveauregelventil (65; 83) versehene Anschlussleitung (67) mit einer Hauptdruckleitung (69; 95) verbindbar und gegenüber dieser absperrbar sind, wobei die Hauptdruckleitung (69; 95) über mindestens ein zugeordnetes Ventil (82) wechselweise mit einer Druckluftquelle und einer Druckluftsenke verbindbar sowie gegenüber diesen absperrbar ist, **dadurch gekennzeichnet, dass** die Federbälge (62, 63) der mindestens an einer Fahrzeugachse angeordneten Luftfedern parallel zu der ersten Anschlussleitung (67) zumindest über eine mit einem zweiten Niveauregelventil (66; 84) versehene zweite Anschlussleitung (68) mit der Hauptdruckleitung (69; 95) verbindbar und gegenüber dieser absperrbar sind, dass das zweite Niveauregelventil (66; 84) der betreffenden Federbälge (62, 63) eine gleich große Düsenquerschnittsfläche (NW_{X} = NW_{Y}) aufweist wie das erste Niveauregelventil (65; 83), und dass dem zweiten Niveauregelventil (66; 84) in Belüftungsrichtung eine Drossel (72; 101) nachgeschaltet ist, deren Drosselquerschnittsfläche (NW_{D}) kleiner als die Düsenquerschnittsfläche (NW_{Y}) des betreffenden zweiten Niveauregelventils (66; 84) ist (NW_{D} < NW_{Y}).

9. Luftfederungsanlage nach Anspruch 8, **dadurch gekennzeichnet, dass** zumindest die zwei den Federbälgen (62, 63) der Luftfedern einer Fahrzeugachse zugeordneten Niveauregelventile (65, 66; 83, 84) und die dem betreffenden zweiten Niveauregelventil (66; 84) nachgeschaltete Drossel (72; 101) in einem gemeinsamen Ventilblock (73; 81) angeordnet sind.

10. Luftfederungsanlage nach Anspruch 9, **dadurch gekennzeichnet, dass** der Ventilblock (81) mit einem Anschlussdeckel (103) versehen ist, der eine Anschlussbohrung (100) für einen unmittelbaren Anschluss des ersten Niveauregelventils (83) an den zugeordneten Federbalg, einen Abschlussdeckel (102) anstelle einer Anschlussbohrung für einen unmittelbaren Anschluss des zweiten Niveauregelventils (84) an einen zugeordneten Federbalg, und eine als Drosselbohrung ausgeführte Drossel (101) zur balgseitig gedrosselten Verbindung des zweiten Niveauregelventils (84) mit der Anschlussbohrung (100) des ersten Niveauregelventils (83) aufweist.

11. Luftfederungsanlage nach wenigstens einem der Ansprüche 8 bis 10, **dadurch gekennzeichnet, dass** einem Lufttrockner in Belüftungsrichtung eine Drossel nachgeschaltet ist, deren Drosselquerschnittsfläche größer als die Summe der Düsenquerschnittsflächen des betreffenden ersten Niveauregelventils (65; 83) und der Drosselquerschnittsfläche der dem betreffenden zweiten Niveauregelventil (66; 84) nachgeschalteten Drossel (72; 101) ist (NW_{Z} > (NW_{X}² + NW_{D}²)^{0,5}).

12. Verfahren zur Steuerung einer Luftfederungsanlage eines Kraftfahrzeugs beim Be- und Entlüften von Federbälgen (62, 63), die zumindest den an einer Fahrzeugachse angeordneten Luftfedern zugeordnet und gemeinsam über zwei parallele, jeweils mit einem Niveauregelventil (65, 66) versehene Anschlussleitungen (67, 68) mit einer Hauptdruckleitung (69) verbindbar und gegenüber dieser absperrbar sind, wobei die zwei Niveauregelventile (65, 66) der betreffenden Federbälge (62, 63) gleich große Düsenquerschnittsflächen aufweisen (NW_{X} = NW_{Y}), und einem der zwei Niveauregelventile (66) in Belüftungsrichtung eine Drossel (72) nachgeschaltet ist, deren Drosselquerschnittsfläche (NW_{D}) kleiner als die Düsenquerschnittsfläche (NW_{Y}) des zugeordneten Niveauregelventils (66) ist (NW_{D} < NW_{Y}), **dadurch gekennzeichnet, dass** bei einem langsamen Absenken oder Anheben des Fahrzeugaufbaus an der betreffenden Fahrzeugachse dasjenige Niveauregelventil (66) der Federbälge (62, 63) geöffnet wird, dem die Drossel (72) nachgeschaltet ist.

13. Verfahren zur Steuerung einer Ventilanordnung nach Anspruch 12, **dadurch gekennzeichnet, dass** bei einem Absenken oder Anheben des Fahrzeugaufbaus an der betreffenden Fahrzeugachse mit mittlerer Stellgeschwindigkeit dasjenige Niveauregelventil (65) der Federbälge (62, 63) geöffnet wird, dem keine Drossel nachgeschaltet ist.

14. Verfahren zur Steuerung einer Ventilanordnung nach Anspruch 12, **dadurch gekennzeichnet, dass** bei einem schnellen Absenken oder Anheben des Fahrzeugaufbaus an der betreffenden Fahrzeugachse beide Niveauregelventile (65 und 66) der Federbälge (62, 63) geöffnet werden.

## Claims

1. Pneumatic suspension system (1a, 1b, 1e) for a motor vehicle, having a plurality of spring bellows (23, 24) that are associated with the pneumatic springs of at least one vehicle axle, can be connected by means of connection lines (29, 30) that are each provided with a level control valve (25, 26; 83) to a main pressure line (22; 95), and can be shut off with respect to same, wherein the main pressure line (22; 95) can be connected by means of at least one associated valve (3, 6, 10, 34; 82) alternately to a compressed air source and a compressed air sink and can be shut off with respect to same, **characterized in that** the spring bellows (23; 24) of the pneumatic springs arranged at least on one vehicle axle or on one vehicle side can be respectively connected to the main pressure line (22; 95) in parallel with the first connection lines (29; 30) at least by means of a second connection line (31; 32) provided with a second level control valve (27; 28; 84) and can be shut off with respect to said main pressure line, **in that** the second level control valves (27; 28; 84) of the relevant spring bellows (23; 24) each have nozzle cross-sectional areas of the same size (NW_{X} = NW_{Y}) as the first level control valves (25; 26; 83), and **in that** a restrictor (51; 52; 101) is arranged after each of the second level control valves (27; 28; 84) in the air admission direction, the cross-sectional areas (NW_{D}) of said restrictors being smaller than the nozzle cross-sectional area (NW_{Y}) of the relevant second level control valve (27; 28; 84) (NW_{D} < NW_{Y}).

2. Pneumatic suspension system according to Claim 1, **characterized in that** at least the two level control valves (25, 27; 26, 28; 83, 84) associated with the spring bellows (23; 24) of a single pneumatic spring and the restrictor (51; 52; 101) arranged after the relevant second level control valve (27; 28; 84) are arranged in a common valve block (48, 49; 81).

3. Pneumatic suspension system according to Claim 2, **characterized in that** the valve block (81) is provided with a connection cap (103), which has a connection bore (100) for direct connection of the respective first level control valve (83) to the associated spring bellows, an end cap (102) instead of a connection bore for direct connection of the respective second level control valve (84) to an associated spring bellows, and a restrictor (101) embodied as a restriction bore for connection, in a manner restricted on the bellows side, of the respective second level control valve (84) to the connection bore (100) of the respective first level control valve (83).

4. Pneumatic suspension system according to one of Claims 1 to 3, **characterized in that** an air dryer (7) has arranged after it, in the air admission direction, a restrictor (8), the restrictor cross-sectional area of which is larger than the sum of the nozzle cross-sectional areas of the relevant first level control valves (25, 26) and of the restrictor cross-sectional areas of the restrictors (51, 52) arranged after the relevant second level control valves (27, 28) (NW_{Z} > (n_{FB} * (NW_{X}² + NW_{D}²))^{0.5}).

5. Method for controlling a pneumatic suspension system of a motor vehicle during admission of air to and venting of air from spring bellows (23; 24) that are associated at least with the pneumatic springs arranged on one vehicle axle or on one vehicle side, can each be connected by means of two parallel connection lines (29, 31; 30, 32) that are each provided with a level control valve (25, 27; 26, 28) to a main pressure line (22), and can be shut off with respect to same, wherein the two respective level control valves (25, 27; 26, 28) of the relevant spring bellows (23; 24) have nozzle cross-sectional areas of the same size (NW_{X} = NW_{Y}), and a restrictor (51; 52), the restrictor cross-sectional area (NW_{D}) of which is smaller than the nozzle cross-sectional area (NW_{Y}) of the associated level control valve (27; 28) (NW_{D} < NW_{Y}), is in each case arranged after one of the two level control valves (27; 28) in the air admission direction, **characterized in that** in each case that level control valve (27; 28) of the relevant spring bellows (23; 24) after which a restrictor (51; 52) is arranged is opened when lowering or raising the vehicle body slowly at at least one of the vehicle axles or on one vehicle side.

6. Method for controlling a pneumatic suspension system according to Claim 5, **characterized in that** in each case that level control valve (25; 26) of the relevant spring bellows (23; 24) after which no restrictor is arranged is opened when lowering or raising the vehicle body at at least one of the vehicle axles or on one vehicle side with a medium actuating speed.

7. Method for controlling a pneumatic suspension system according to Claim 5, **characterized in that** in each case both level control valves (25 and 27; 26 and 28) of the relevant spring bellows (23; 24) are opened when lowering or raising the vehicle body quickly at at least one of the vehicle axles or on one vehicle side.

8. Pneumatic suspension system of a motor vehicle, having a plurality of spring bellows (62, 63) that are associated with the pneumatic springs of at least one vehicle axle, can be connected jointly by means of a connection line (67) provided with a level control valve (65; 83) to a main pressure line (69; 95), and can be shut off with respect to same, wherein the main pressure line (69; 95) can be connected by means of at least one associated valve (82) alternately to a compressed air source and a compressed air sink and can be shut off with respect to same, **characterized in that** the spring bellows (62, 63) of the pneumatic springs arranged at least on one vehicle axle can be connected to the main pressure line (69; 95) in parallel with the first connection line (67) at least by means of a second connection line (68) provided with a second level control valve (66; 84) and can be shut off with respect to said main pressure line, **in that** the second level control valve (66; 84) of the relevant spring bellows (62, 63) has a nozzle cross-sectional area of the same size (NW_{X} = NW_{Y}) as the first level control valve (65; 83), and **in that** a restrictor (72; 101) is arranged after the second level control valve (66; 84) in the air admission direction, the cross-sectional area (NW_{D}) of said restrictor being smaller than the nozzle cross-sectional area (NW_{Y}) of the relevant second level control valve (66; 84) (NW_{D} < NW_{Y}).

9. Pneumatic suspension system according to Claim 8, **characterized in that** at least the two level control valves (65, 66; 83, 84) associated with the spring bellows (62, 63) of the pneumatic springs of a vehicle axle, and the restrictor (72; 101) arranged after the relevant second level control valve (66; 84) are arranged in a common valve block (73; 81).

10. Pneumatic suspension system according to Claim 9, **characterized in that** the valve block (81) is provided with a connection cap (103), which has a connection bore (100) for direct connection of the first level control valve (83) to the associated spring bellows, an end cap (102) instead of a connection bore for direct connection of the second level control valve (84) to an associated spring bellows, and a restrictor (101) embodied as a restriction bore for connection, in a manner restricted on the bellows side, of the second level control valve (84) to the connection bore (100) of the first level control valve (83).

11. Air suspension system according to at least one of Claims 8 to 10, **characterized in that** an air dryer has arranged after it, in the air admission direction, a restrictor, the restrictor cross-sectional area of which is larger than the sum of the nozzle cross-sectional areas of the relevant first level control valve (65; 83) and of the restrictor cross-sectional area of the restrictor (72; 101) arranged after the relevant second level control valve (66; 84) (NW_{Z} > (NW_{X}² + NW_{D}²)^{0.5}).

12. Method for controlling a pneumatic suspension system of a motor vehicle during admission of air to and venting of air from spring bellows (62, 63) that are associated at least with the pneumatic springs arranged on one vehicle axle, can each be connected jointly by means of two parallel connection lines (67, 68) that are each provided with a level control valve (65, 66) to a main pressure line (69), and can be shut off with respect to same, wherein the two level control valves (65, 66) of the relevant spring bellows (62, 63) have nozzle cross-sectional areas of the same size (NW_{X} = NW_{Y}, and a restrictor (72), the restrictor cross-sectional area (NW_{D}) of which is smaller than the nozzle cross-sectional area (NW_{Y}) of the associated level control valve (66) (NW_{D} < NW_{Y}), is arranged after one of the two level control valves (66) in the air admission direction, **characterized in that** that level control valve (66) of the spring bellows (62, 63) after which the restrictor (72) is arranged is opened when lowering or raising the vehicle body slowly at the relevant vehicle axle.

13. Method for controlling a valve arrangement according to Claim 12, **characterized in that** that level control valve (65) of the spring bellows (62, 63) after which no restrictor is arranged is opened when lowering or raising the vehicle body at the relevant vehicle axle with a medium actuating speed.

14. Method for controlling a valve arrangement according to Claim 12, **characterized in that** both level control valves (65 and 66) of the spring bellows (62, 63) are opened when lowering or raising the vehicle body quickly at the relevant vehicle axle.

## Revendications

1. Installation de suspension pneumatique (1a, 1b, 1e) d'un véhicule automobile, comprenant plusieurs soufflets de ressort (23, 24) associés aux ressorts pneumatiques d'au moins un essieu du véhicule, qui peuvent être connectés, par le biais de conduites de raccordement (29, 30) pourvues à chaque fois d'une soupape de régulation de niveau (25, 26 ; 83), à une conduite de pression principale (22 ; 95) et qui peuvent être bloqués par rapport à celle-ci, la conduite de pression principale (22 ; 95) pouvant être connectée par le biais d'au moins une soupape associée (3, 6, 10, 34 ; 82) de manière alternative à une source d'air comprimé et à une aspiration d'air comprimé, et pouvant être bloquée par rapport à celles-ci, **caractérisée en ce que** les soufflets de ressort (23 ; 24) des ressorts pneumatiques disposés au moins sur un essieu du véhicule ou sur un côté du véhicule peuvent être connectés parallèlement aux premières conduites de raccordement (29 ; 30) à chaque fois au moins par le biais d'une deuxième conduite de raccordement (31 ; 32) pourvue d'une deuxième soupape de régulation de niveau (27 ; 28 ; 84) à la conduite de pression principale (22 ; 95) et peuvent être bloqués par rapport à celle-ci, **en ce que** les deuxièmes soupapes de régulation de niveau (27 ; 28 ; 84) des soufflets de ressort concernés (23; 24) présentent à chaque fois des surfaces en section transversale de buse identiques (NW_{X} = NW_{Y}) à celles des premières soupapes de régulation de niveau (25 ; 26 ; 83) et **en ce qu'**un étranglement (51 ; 52 ; 101) est à chaque fois monté en aval des deuxièmes soupapes de régulation de niveau (27 ; 28 ; 84) dans le sens de la ventilation, dont la surface en section transversale d'étranglement (NW_{D}) est inférieure à la surface en section transversale de buse (NW_{Y}) de la deuxième soupape de régulation de niveau concernée (27 ; 28 ; 84) (NW_{D} < NW_{Y}).

2. Installation de suspension pneumatique selon la revendication 1, **caractérisée en ce qu'**au moins les deux soupapes de régulation de niveau (25, 27 ; 26, 28 ; 83, 84) associées au soufflet de ressort (23 ; 24) d'un ressort pneumatique individuel et l'étranglement (51 ; 52 ; 101) monté en aval de la deuxième soupape de régulation de niveau concernée (27 ; 28 ; 84) sont disposés dans un bloc-soupapes commun (48, 49 ; 81).

3. Installation de suspension pneumatique selon la revendication 2, **caractérisée en ce que** le bloc-soupapes (81) est pourvu d'un couvercle de raccordement (103) qui présente un alésage de raccordement (100) pour un raccordement direct de la première soupape de régulation de niveau respective (83) au soufflet de ressort associé, un couvercle de terminaison (102) au lieu d'un alésage de raccordement pour un raccordement direct de la deuxième soupape de régulation de niveau respective (84) à un soufflet de ressort associé, et un étranglement (101) réalisé en tant qu'alésage d'étranglement pour la liaison étranglée du côté du soufflet de la deuxième soupape de régulation de niveau respective (84) à l'alésage de raccordement (100) de la première soupape de régulation de niveau respective (83).

4. Installation de suspension pneumatique selon l'une quelconque des revendications 1 à 3, **caractérisée en ce qu'**un étranglement (8) est monté en aval d'un dessiccateur d'air (7) dans le sens de la ventilation, dont la surface en section transversale d'étranglement est plus grande que la somme des surfaces en section transversale de buse des premières soupapes de régulation de niveau concernées (25, 26) et des surfaces en section transversale d'étranglement des étranglements (51, 52) montés en aval des deuxièmes soupapes de régulation de niveau concernées (27, 28) (NW_{Z} > (n_{FS} * ( NW_{X}² + NW_{D}²))^{0,5}).

5. Procédé de commande d'une installation de suspension pneumatique d'un véhicule automobile lors de la ventilation et de la désaération de soufflets de ressort (23 ; 24), qui sont associés au moins aux ressorts pneumatiques disposés au niveau d'un essieu du véhicule ou au niveau d'un côté du véhicule et qui peuvent être connectés à une conduite de pression principale (22) à chaque fois par le biais de deux conduites de raccordement (29, 31 ; 30, 32) parallèles pourvues à chaque fois d'une soupape de régulation de niveau (25, 27 ; 26, 28) et qui peuvent être bloqués par rapport à celle-ci, les deux soupapes de régulation de niveau respectives (25, 27 ; 26, 28) des soufflets de ressort concernés (23 ; 24) présentant des surfaces en section transversale de buse identiques (NW_{X} = NW_{Y}), et un étranglement respectif (51 ; 52) étant monté en aval de l'une des deux soupapes de régulation de niveau (27 ; 28) dans le sens de la ventilation, dont la surface en section transversale d'étranglement (NW_{D}) est inférieure à la surface en section transversale de buse (NW_{Y}) de la soupape de régulation de niveau associée (27 ; 28) (NW_{D} < NW_{Y}), **caractérisé en ce que** dans le cas d'un abaissement ou d'un soulèvement lent de la caisse du véhicule au niveau d'au moins l'un des essieux du véhicule ou au niveau d'un côté du véhicule, à chaque fois la soupape de régulation de niveau (27 ; 28) des soufflets de ressort concernés (23 ; 24), en aval de laquelle est monté un étranglement (51 ; 52), est ouverte.

6. Procédé de commande d'une installation de suspension pneumatique selon la revendication 5, **caractérisé en ce que** dans le cas d'un abaissement ou d'un soulèvement de la caisse du véhicule au niveau d'au moins l'un des essieux du véhicule ou au niveau d'un côté du véhicule avec une vitesse de réglage moyenne, à chaque fois la soupape de régulation de niveau (25 ; 26) des soufflets de ressort concernés (23 ; 24), en aval de laquelle aucun étranglement n'est monté, est ouverte.

7. Procédé de commande d'une installation de suspension pneumatique selon la revendication 5, **caractérisé en ce que** dans le cas d'un abaissement ou d'un soulèvement rapide de la caisse du véhicule au niveau d'au moins l'un des essieux du véhicule ou au niveau d'un côté du véhicule, à chaque fois les deux soupapes de régulation de niveau (25 et 27 ; 26 et 28) des soufflets de ressort concernés (23 ; 24) sont ouvertes.

8. Installation de suspension pneumatique d'un véhicule automobile, comprenant plusieurs soufflets de ressort (62, 63) associés aux ressorts pneumatiques d'au moins un essieu du véhicule, qui peuvent être connectés ensemble, par le biais d'une conduite de raccordement (67) pourvue d'une soupape de régulation de niveau (65 ; 83), à une conduite de pression principale (69 ; 95) et qui peuvent être bloqués par rapport à celle-ci, la conduite de pression principale (69 ; 95) pouvant être connectée par le biais d'au moins une soupape associée (82) de manière alternative à une source d'air comprimé et à une aspiration d'air comprimé, et pouvant être bloquée par rapport à celles-ci, **caractérisée en ce que** les soufflets de ressort (62, 63) des ressorts pneumatiques disposés au moins sur un essieu du véhicule peuvent être connectés parallèlement à la première conduite de raccordement (67) au moins par le biais d'une deuxième conduite de raccordement (68) pourvue d'une deuxième soupape de régulation de niveau (66 ; 84) à la conduite de pression principale (69 ; 95) et peuvent être bloqués par rapport à celle-ci, **en ce que** la deuxième soupape de régulation de niveau (66 ; 84) des soufflets de ressort concernés (62, 63) présente une surface en section transversale de buse identique (NW_{X} = NW_{Y}) à celle de la première soupape de régulation de niveau (65 ; 83) et **en ce qu'**un étranglement (72 ; 101) est monté en aval de la deuxième soupape de régulation de niveau (66 ; 84) dans le sens de la ventilation, dont la surface en section transversale d'étranglement (NW_{D}) est inférieure à la surface en section transversale de buse (NW_{Y}) de la deuxième soupape de régulation de niveau concernée (66 ; 84) (NW_{D} < NW_{Y}).

9. Installation de suspension pneumatique selon la revendication 8, **caractérisée en ce qu'**au moins les deux soupapes de régulation de niveau (65, 66 ; 83, 84) associées aux soufflets de ressort (62, 63) des ressorts pneumatiques d'un essieu du véhicule et l'étranglement (72 ; 101) monté en aval de la deuxième soupape de régulation de niveau concernée (66 ; 84) sont disposés dans un bloc-soupapes commun (73 ; 81).

10. Installation de suspension pneumatique selon la revendication 9, **caractérisée en ce que** le bloc-soupapes (81) est pourvu d'un couvercle de raccordement (103) qui présente un alésage de raccordement (100) pour un raccordement direct de la première soupape de régulation de niveau (83) au soufflet de ressort associé, un couvercle de terminaison (102) au lieu d'un alésage de raccordement pour un raccordement direct de la deuxième soupape de régulation de niveau (84) à un soufflet de ressort associé, et un étranglement (101) réalisé en tant qu'alésage d'étranglement pour la liaison étranglée du côté du soufflet de la deuxième soupape de régulation de niveau (84) à l'alésage de raccordement (100) de la première soupape de régulation de niveau (83).

11. Installation de suspension pneumatique selon au moins l'une quelconque des revendications 8 à 10, **caractérisée en ce qu'**un étranglement est monté en aval d'un dessiccateur d'air dans le sens de la ventilation, dont la surface en section transversale d'étranglement est plus grande que la somme des surfaces en section transversale de buse de la première soupape de régulation de niveau concernée (65 ; 83) et de la surface en section transversale d'étranglement des étranglements (72 ; 101) montés en aval de la deuxième soupape de régulation de niveau concernée (66 ; 84) (NW_{Z} > (NW_{X}² + NW_{D}²)^{0,5}).

12. Procédé de commande d'une installation de suspension pneumatique d'un véhicule automobile lors de la ventilation et de la désaération de soufflets de ressort (62, 63), qui sont associés au moins aux ressorts pneumatiques disposés au niveau d'un essieu du véhicule et qui peuvent être connectés ensemble à une conduite de pression principale (69) par le biais de deux conduites de raccordement (67, 68) parallèles pourvues à chaque fois d'une soupape de régulation de niveau (65, 66) et qui peuvent être bloqués par rapport à celle-ci, les deux soupapes de régulation de niveau (65, 66) des soufflets de ressort concernés (62, 63) présentant des surfaces en section transversale de buse identiques (NW_{X} = NW_{Y}), et un étranglement (72) étant monté en aval de l'une des deux soupapes de régulation de niveau (66) dans le sens de la ventilation, dont la surface en section transversale d'étranglement (NW_{D}) est inférieure à la surface en section transversale de buse (NW_{Y}) de la soupape de régulation de niveau associée (66) (NW_{D} < NW_{Y}), **caractérisé en ce que** dans le cas d'un abaissement ou d'un soulèvement lent de la caisse du véhicule au niveau de l'essieu concerné du véhicule, la soupape de régulation de niveau (66) des soufflets de ressort (62, 63), en aval de laquelle est monté l'étranglement (72), est ouverte.

13. Procédé de commande d'un agencement de soupape selon la revendication 12, **caractérisé en ce que** dans le cas d'un abaissement ou d'un soulèvement de la caisse du véhicule au niveau de l'essieu concerné du véhicule avec une vitesse de réglage moyenne, la soupape de régulation de niveau (65) des soufflets de ressort (62, 63), en aval de laquelle aucun étranglement n'est monté, est ouverte.

14. Procédé de commande d'un agencement de soupape selon la revendication 12, **caractérisé en ce que** dans le cas d'un abaissement ou d'un soulèvement rapide de la caisse du véhicule au niveau de l'essieu concerné du véhicule, les deux soupapes de régulation de niveau (65 et 66) des soufflets de ressort (62, 63) sont ouvertes.
